# EUROPÄISCHE PATENTSCHRIFT

(11) **EP 2 673 679 B1**
(45) Veröffentlichungstag und Bekanntmachung des Hinweises auf die Patenterteilung: **31.03.2021**
(21) Anmeldenummer: 12702769.6
(22) Anmeldetag: 06.02.2012
(51) Int. Cl.: G05B 19/416

(54) **ANPASSUNG DER DYNAMIK ZUMINDEST EINES ROBOTERS**
ADAPTING THE DYNAMICS OF AT LEAST ONE ROBOT
ADAPTATION DE LA DYNAMIQUE D'AU MOINS UN ROBOT

(30) Priorität: 07.02.2011 DE 102011010505
(43) Veröffentlichungstag der Anmeldung: 18.12.2013
(73) Patentinhaber: Dürr Systems AG, 74321 Bietigheim-Bissingen (DE)
(72) Erfinder: HERRE, Frank, 71739 Oberriexingen (DE)
(74) Vertreter: Kotitschke, Bernd
(86) Internationale Anmeldenummer: PCT/EP2012/000531
(87) Internationale Veröffentlichungsnummer: WO 2012/107199

(56) Entgegenhaltungen:
- EP-A1- 2 169 492
- EP-B1- 0 877 660
- DE-C1- 19 637 730
- JP-A- 9 136 287
- US-A1- 2003 014 156

## Beschreibung

Die Erfindung betrifft ein Betriebsverfahren für einen Applikationsroboter oder einen ersten Roboter und zumindest einen weiteren zweiten Roboter, vorzugsweise Beschichtungsroboter zum Beschichten zumindest eines Werkstücks oder mehrerer Werkstücke. Ferner betrifft die Erfindung ein entsprechendes Steuersystem und ein entsprechendes Computerprogramm und einen oder mehrere entsprechende Applikationsroboter. Die Erfindung findet vorteilhaft Anwendung in einer Lackieranlage, insbesondere bei der Lackierung von Kraftfahrzeugkarosserien, Anbauteilen für Kraftfahrzeugkarosserien, Kleinteilen, Bumpern bzw. Stoßfängern, Stoßstangenelementen, Stoßstangen, Stoßleisten, etc.

Zum Stand der Technik wird zunächst auf die DE 196 37 730 C1 verwiesen, die ein Verfahren zum automatischen Beschichten von Werkstücken offenbart, die serienweise von einer Fördereinrichtung an mindestens zwei längs der Förderrichtung hintereinander angeordneten Beschichtungsvorrichtungen vorbeigeführt werden, welche unter Steuerung durch einen elektronischen Steuerrechner jeweils mit einer einstellbaren Oszillationsfrequenz zwischen zwei Endpunkten quer oder vertikal bezüglich der Förderrichtung hin- und herbewegt werden und hierbei einander überlappende Bahnen des Beschichtungsmaterials mit einstellbarer Breite auf das sich an ihnen vorbeibewegende Werkstück auftragen, wobei dem Steuerrechner ein die Größe einer gewünschten Oszillationsfrequenz entsprechender Steuerbefehl eingegeben wird und der Steuerrechner die Oszillationsfrequenz der Beschichtungsvorrichtungen auf diese Größe einstellt, und wobei ein weiterer Steuerbefehl eingegeben wird, durch den der Steuerrechner die Auftreffpunkte des Beschichtungsmaterials mindestens einer der Beschichtungsvorrichtungen in Bezug auf die Auftreffpunkte mindestens einer anderen Beschichtungsvorrichtung längs der Förderrichtung verschiebt. Ebenfalls wird auf die US 2003/014156 A1 verwiesen.

In modernen Lackieranlagen zur Lackierung von Kraftfahrzeugkarosserien und Anbauteilen für Kraftfahrzeugkarosserien werden zur Führung der Applikationstechnik, beispielsweise eines Rotationszerstäubers, herkömmlicherweise mehrachsige Lackierroboter eingesetzt.

Im Stand der Technik sind grundsätzlich zwei Möglichkeiten bekannt, um eine optimale Auslastung eines Lackierroboters beim Lackieren zu erreichen.

Die eine Möglichkeit ist, dass der Lackierroboter, sofern es die Antriebstechnik zulässt, mit konstanter Geschwindigkeit eine komplett geteachte Lackierbahn abfährt und dabei nicht von der vorgegebenen Lackierbahn abweicht. Es gibt also keine Bahn- oder Geschwindigkeitsabweichung. Diese Version führt zur maximalen Belastung des Lackierroboters und zur theoretisch besten Lackschichtdickenverteilung und Reproduzierbarkeit auf dem zu lackierenden Werkstück. Wenn diese Version nicht ausführbar ist, z.B. aufgrund bestimmter Einschränkungen, insbesondere einer Überschreitung des maximalen Motormoments oder eines maximal zulässigen Drehmoments des Lackierroboters, gibt es im Wesentlichen die vier nachfolgend beschriebenen Optionen (A, B, C und D), darauf zu reagieren.
A. Der Roboter stoppt an der kritischen Stelle und der Teacher (Bahnprogrammierer) muss sein Lackierprogramm so abändern, dass der Lackierroboter das Programm zukünftig abfahren kann.
B. Die Bahn wird korrekt abgefahren. Der Lackierroboter reduziert aber die Geschwindigkeit, um die Bahn korrekt abfahren zu können.
C. Die Geschwindigkeit wird konstant gehalten. Der Lackierroboter weicht aber von der Lackierbahn ab (fährt z.B. einen Radius anstatt einer Ecke, fährt einen großen Radius anstatt eines kleinen Radius, fährt weitere nicht näher beschriebene Bahnfragmente/Abläufe ab, die den Weg zwischen zwei geteachten Punkten verkürzen).
D. Kombination aus B und C. Sowohl der Bahnverlauf als auch die Geschwindigkeit entsprechen nicht den Vorgaben (Teachprogramm).

Die andere Möglichkeit ist, dass der Lackierroboter im Rahmen seiner maximal möglichen Beschleunigung bzw. Geschwindigkeit die Lackierprogramme, die geteacht wurden, abfährt. Ein Berechnungsmodell, das die Belastung der einzelnen Achsen des Lackierroboters berechnet, verhindert durch Absenken des Antriebsmoments bzw. einer Beschleunigungs- bzw. Geschwindigkeitsabsenkung eine Überlastung der Mechanik, was als dynamisches Robotermodell bekannt ist. Dadurch kann die Standzeit bzw. Haltbarkeit des Lackierroboters verlängert bzw. dessen Leistung fast optimal ausgenutzt werden. Die Absenkung führt aber zu einer Geschwindigkeitsreduzierung und/oder zu einer Bahnabweichung. Dies bedeutet z.B., dass im Nahbereich des Lackierroboters, wo üblicherweise relativ niedrige Belastungen vorliegen, hohe Beschleunigungen möglich sind und im Fernbereich, z.B. bei ausgestrecktem Zustand des Lackierroboters, wo üblicherweise relativ hohe Belastungen vorliegen, nur niedrige Beschleunigungen.

Was nun wünschenswert für die Nutzung des Lackierroboters ist, ist für das Lackierergebnis von Nachteil. Die besten Lackierergebnisse werden üblicherweise erzielt, wenn die Lackierparameter konstant gehalten werden können, also auch insbesondere die Lackiergeschwindigkeit, die Beschleunigung und die Lackierbahn bzw. die Bahnreproduzierbarkeit. Eine Kompensation einiger Parameterabweichungen des Lackierroboters kann nur sehr schwierig oder gar nicht durch die Lackiertechnik ausgeglichen werden. Zumindest ist der Aufwand sehr groß und würde das Lackieren sehr komplex machen. Dies wäre für viele Lackieranlagenbetreiber aber nicht beherrschbar oder hinnehmbar. Eine Lackieranlage sollte insbesondere beschaffen sein, so einfach wie möglich arbeiten zu können und gleichzeitig sehr gute Lackierergebnisse erzielen.

Ein Effekt, der im Stand der Technik beim Lackieren von Kraftfahrzeugkarosserien und deren Anbauteilen auftritt, insbesondere beim Lackieren mit dem dynamischen Robotermodell, ist also, dass die Abweichungen von der Geschwindigkeit bzw. Beschleunigung und/oder der Lackierbahn zu Abweichungen im optimalen Lackierauftrag bzw. zu einem ungleichen Lackierergebnis führen, wie z.B. Schichtdickenabweichungen, Farbtonabweichungen und ein ungleichmäßig aussehendes Erscheinungsbild der Lackierung. Weiterhin kann die Ablaufzeit bzw. Taktzeit des Lackierprogramms beeinflusst werden (insbesondere verlängert oder verkürzt) und schwieriger vorhersehbar sein.

Ferner kommt es in einer Lackieranlage üblicherweise zu veränderten Lackierbahnabläufen. Viele Prozesse in einer Lackieranlage bzw. Lackierkabine können Abweichungen im Programmstart oder ein Offset der Programme erzeugen (z.B. Vermessen des Lackierwerkstücks und Kompensation der ungenauen Position des Lackierwerkstücks, Verhalten bei Störung und Wiederanlauf, Warten auf Prozessfreigabe durch Prozesstechnik wie z.B. Drehzahl, Hochspannung, Spülprogramme, Andocken usw.). Auch gibt es das Verhalten, dass bei einer Störung der Lackierroboter das Lackierprogramm, das Lackiermodel oder die Lackierbahn fertig lackiert bzw. abfährt, obwohl das das Werkstück befördernde Förderband angehalten wurde. Die Roboterbahnen verlaufen dann anders als sonst. Die Verschiebung führt zu einem veränderten Bahnablauf. Die veränderten Roboterbahnen können nun in für den Lackierroboter ungünstigeren Erreichbarkeitsbereichen liegen. Dies führt dann wiederum möglicherweise zu einer Reduzierung oder einem Einbruch der Beschleunigung oder Geschwindigkeit oder beim Abweichen von der Roboterbahn zu Problemen mit der Reproduzierbarkeit.

Ein weiteres Problem ist die Kopierbarkeit von Lackierprogrammen, was beispielhaft an der Lackierung von Anbauteilen erläutert wird. Bei der Anbauteillackierung sind oft mehrere Anbauteile übereinander angeordnet. Jedes Anbauteil ist im Wesentlichen gleich, sollte also gleich lackiert werden und sollte der Einfachheit halber auch gleich geteacht sein, womit ein Kopieren möglich wäre. Wenn nun die Programme kopiert werden, kann es z.B. zu dem Problem kommen, dass ein Anbauteil gut erreichbar ist (insbesondere im Nahbereich des Roboters, z.B. unten am Warenträger) und ein anderes Anbauteil aber nur schwer (insbesondere im Fernbereich des Roboters, z.B. oben am Warenträger). Dies führt nun dazu, dass die Anbauteile mit unterschiedlichen Geschwindigkeiten bzw. Beschleunigungen und/oder Roboterbahnen lackiert werden, da unten die Programme ohne Reduzierung bzw. Einbruch und/oder Abweichung ablaufen, jedoch oben mit. Das Lackierergebnis kann also unterschiedlich sein, obwohl die geteachten Programme bzw. Lackierbahnen gleich sind. Die Abweichungen können von oben nach unten von rechts nach links von vorne nach hinten auftreten, je nach der Anordnung des Lackierroboters, des Lackierobjekts und der Lackierprogramme.

Die vorstehenden Probleme wurden beispielhaft unter Bezugnahme auf Lackierprozesse erörtert. Einige der vorstehenden Probleme treten aber ebenso bei anderen Applikationsprozessen entsprechend auf, z.B. beim Applizieren von Dicht- oder Sealingmaterialen (z.B. bei der Nahtabdichtung), Klebematerialen, etc. auf Kraftfahrzeugkarosserien oder deren Anbauteile.

Zum allgemeinen technologischen Hintergrund ist noch auf die DE 101 33 624 A1, DE 10 2004 026 813 A1, DE 20 2005 007 654 A1, WO 2005/063454 A1, DE 10 2004 028 557 A1, DE 10 2004 028 565 A1 und DE 103 49 361 A1 hinzuweisen.

In Anbetracht obiger Ausführungen wird es Fachleuten anhand dieser Offenbarung ersichtlich, dass ein Bedarf an der Lösung oder Überwindung oben beschriebener Probleme oder Nachteile besteht.

Die sich aus vorstehend Genanntem ergebenden Aufgaben können im Wesentlichen mit den Merkmalen der unabhängigen Ansprüche gelöst werden.
Die Erfindung umfasst die allgemeine technische Lehre, voneinander abweichende Dynamikverhalten und/oder Belastungskennwerte eines Roboters oder mehrerer Roboter aneinander anzupassen, insbesondere aneinander zumindest ungefähr anzugleichen, vorzugsweise so, dass diese im Wesentlichen korrespondieren, d.h. im Wesentlich gleich bzw. symmetrisch (insbesondere spiegelsymmetrisch) sind.

Die Erfindung umfasst ein Betriebsverfahren für einen Roboter oder mehrere Roboter, insbesondere ein Verfahren zum Steuern eines Roboters oder mehrerer Roboter, vorzugsweise eines ersten Roboters und zumindest eines weiteren zweiten Roboters. Das Betriebsverfahren kann vorzugsweise ein Anpassungs- und/oder Beschichtungsverfahren sein. Die Erfindung ist nicht auf einen ersten und einen zweiten Roboter beschränkt, sondern kann auch drei oder sogar mehr als drei Roboter umfassen.

Es ist möglich, dass ein Roboter und/oder ein erster Roboter und zumindest ein weiterer zweiter Roboter im Betrieb mehrere Stellungsbereiche einnimmt bzw. durchläuft, z.B. beim Abfahren einer (beispielsweise mäanderförmigen) Roboterbahn oder mehrerer Roboterbahnen oder zumindest Abschnitten davon.

Üblicherweise sind Roboter im Betrieb in unterschiedlichen Stellungsbereichen (z.B. Nahbereich und Fernbereich des Roboters) unterschiedlichen maximal zulässigen Belastungen unterworfen, die zu einem unterschiedlichen maximal zulässigen Dynamikverhalten (z.B. unterschiedliche maximal zulässige Beschleunigungen, unterschiedliche maximal zulässige Geschwindigkeiten und/oder zumindest geringfügig unterschiedliche Roboterbahnen) führen.

Es ist ferner üblich, dass selbst baugleiche Roboter in gleichen oder in zu einander korrespondierenden Stellungsbereichen, z.B. wenn die Roboter spiegelbildlich oder nebeneinander bzw. hintereinander positioniert sind, unterschiedliche Belastungskennwerte und/oder ein unterschiedliches Dynamikverhalten aufweisen. Die Unterschiede können sich aus Toleranzen der Mechanik (Achsen, Getriebe, Führungen, Lagerstellen, etc.), Toleranzen bei den Antrieben (Regler, Dynamik, Motoren, Geber, etc.), Abweichungen im Gewicht, Alter des Roboters, Wartungszustand, aber auch durch unterschiedliche Abnutzung oder Verschleiß ergeben. Die Gewichtsunterschiede können insbesondere durch die Applikationstechnik entstehen. Die Applikationstechnik ist üblicherweise die Traglast, für die Roboter ausgelegt werden. Diese variiert je nach zu applizierender Lackart, Applikationsversion, zu beschichtendem Werkstück, Lackieraufgabe und Kundenanspruch usw. sehr stark von wenigen Kilogramm bis hin zu hohen Belastungen an der Handachse und den Roboterarmen. Dies führt dazu, dass selbst baugleiche Roboter in gleichen oder in zueinander korrespondierenden Stellungsbereichen eine unterschiedliche Roboterdynamik aufweisen.

Voneinander abweichende Roboterdynamiken bei Lackierrobotern zum Applizieren von Lack können zu unerwünschten bzw. voneinander abweichenden Lackierergebnissen führen. Dies ist nachteilhaft, da wünschenswert ist, dass das Lackierergebnis einer Kraftfahrzeugkarosserie z.B. links und rechts korrespondierend (gleich bzw. symmetrisch) ist oder mehrere baugleiche Anbauteile oder mehrere baugleiche Kraftfahrzeugkarossieren ein korrespondierendes (gleiches bzw. symmetrisches) Lackierergebnis aufweisen.

Im Rahmen der Erfindung ist es möglich, dass ein Dynamikverhalten und/oder ein Belastungskennwert des Roboters in zumindest einem ersten Stellungsbereich des Roboters an ein Dynamikverhalten und/oder einen Belastungskennwert des Roboters in zumindest einem zweiten Stellungsbereich des Roboters angepasst ist bzw. angepasst wird, vorzugsweise so, dass das Dynamikverhalten und/oder der Belastungskennwert des ersten Stellungsbereichs im Wesentlichen mit dem Dynamikverhalten und/oder dem Belastungskennwert des zweiten Stellungsbereichs korrespondiert, d.h. im Wesentlich gleich bzw. symmetrisch ist.

Im Rahmen der Erfindung ist es auch möglich, dass ein Dynamikverhalten und/oder ein Belastungskennwert des ersten Roboters in zumindest einem ersten Stellungsbereich des ersten Roboters an ein Dynamikverhalten und/oder einen Belastungskennwert des zweiten Roboters in zumindest einem zweiten Stellungsbereich des zweiten Roboters angepasst ist bzw. angepasst wird, vorzugsweise so, dass das Dynamikverhalten und/oder der Belastungskennwert des ersten Stellungsbereichs im Wesentlichen mit dem Dynamikverhalten und/oder dem Belastungskennwert des zweiten Stellungsbereichs korrespondiert, d.h. im Wesentlich gleich bzw. symmetrisch ist.

Die Erfindung ermöglicht, dass ein Roboter in unterschiedlichen Stellungsbereichen ein im Wesentlichen korrespondierendes Dynamikverhalten aufweist und/oder ein erster Roboter und ein zweiter Roboter trotz zumindest geringfügigen Unterschieden (z.B. Toleranzen, Gewicht, Verschleiß, etc.) ein im Wesentlichen korrespondierendes Dynamikverhalten aufweisen. Beispielsweise ist so eine Anpassung zwischen mehreren Robotern möglich, die nacheinander im Wesentlichen gleiche Lackieraufgaben zu erfüllen haben bzw. die im Wesentlichen gleiche Roboter- bzw. Lackierbahnen abzufahren haben, zwischen mehreren Robotern unterschiedlicher Lackierzonen und/oder zwischen mehreren Robotern unterschiedlicher Lackierlinien (mit im Wesentlichen gleicher zu erfüllender Lackieraufgabe bzw. gleichen abzufahrenden Roboterbahnen). Eine Meldung und/oder eine Anpassung kann in den Lackierzonen, den Lackierlinien und/oder der Lackiererei erfolgen.

Zu berücksichtigen ist, dass ein absolut exakt korrespondierendes bzw. gleiches oder symmetrisches Dynamikverhalten und/oder ein exakt gleicher Belastungskennwert praktisch nicht realisierbar sind. Es ist jedoch im Rahmen der Erfindung ausreichend, wenn das angepasste Dynamikverhalten und/oder der angepasste Belastungskennwert innerhalb eines Toleranzbereichs von beispielsweise ±10%, ±5%, ±2%, ±1% liegt.

Die Erfindung ermöglicht vorteilhaft, dass z.B. die Lackierergebnisse-/Qualitäten unabhängig sind von voneinander abweichenden Roboterstellungen bzw. Stellungsbereichen eines Roboters (z.B. im Nahbereich und Fernbereich des Roboters) und/oder unabhängig sind von zumindest geringfügigen Unterschieden des ersten Roboters und des zweiten Roboters.

Erfindungsgemäß kann vorteilhaft erzielt werden, dass nach der Inbetriebnahme der/des Roboter(s) die Lackierung mit einem Roboter, der gleiche oder symmetrische Bahnen lackiert bzw. gleiche oder symmetrische Roboterbahnen abzufahren hat, an vorzugsweise jedem Punkt unbeeinflusst von der Leistung der/des Roboter(s) ist. Stellungsbereiche oder Bahnpunkte und/oder Wende- bzw. Kurvenpunkte die weniger Leistung erfordern, werden vorteilhaft gleich lackiert wie Stellungsbereiche oder Bahnpunkte und/oder Wende- bzw. Kurvenpunkte, die die Maximalleistung der/des Roboter(s) benötigen. Mehrere Roboter mit gleicher oder symmetrischer Lackieraufgabe bzw. gleichen oder symmetrischen abzufahrenden Roboterbahnen (z.B. gleiche Seite, nacheinander, oder gegenüber spiegelbildlich) können ebenso aufeinander abgestimmt werden, so dass es vorteilhaft keinen Einfluss hat, welcher der Roboter die Lackieraufgabe übernimmt. Beispielsweise gibt es rollierende Lackierumfänge für verschiedene Roboter, so dass mehrere Roboter gleich belastet sind oder einer als Reserve vorhanden ist oder einer gereinigt, gewartet oder repariert werden kann.

Besonders vorteilhaft ist somit, dass das Lackierergebnis unabhängig ist von der Roboterleistung der/eines Roboter(s) bzw. unabhängig davon, welcher Roboter in einer Lackierzone oder Lackierlinie die Lackieraufgabe übernimmt. Das ist im Stand der Technik nicht so.

Der Abgleich bzw. die Anpassung des dynamischen Verhaltens bzw. des Belastungskennwerts kann manuell erfolgen oder automatisch.

Darüber hinaus ist ein Kopieren eines Roboterprogramms, insbesondere eines Lackierprogramms möglich, vorteilhaft ohne nachteilhafte Auswirkungen an dem zumindest einen zu lackierenden Werkstück.

Außerdem kann die Roboterstandzeit und/oder Roboterlebensdauer zumindest ungefähr vorausbestimmt und/oder gezielt verändert, insbesondere optimiert werden.

Der erste Stellungsbereich kann z.B. eine bestimmte erste Stellung oder eine Vielzahl von Stellungen umfassen. Vorzugsweise bezieht sich der erste Stellungsbereich auf einen bestimmten Roboterbahnabschnitt, der von dem Roboter, dem ersten Roboter und/oder dem zweiten Roboter, insbesondere einem daran montierten Applikationselement, abzufahren ist.

Der zweite Stellungsbereich kann z.B. eine bestimmte zweite Stellung oder eine Vielzahl von Stellungen umfassen. Vorzugsweise bezieht sich der zweite Stellungsbereich auf einen bestimmten Roboterbahnabschnitt, der von dem Roboter, dem ersten Roboter und/oder dem zweiten Roboter, insbesondere einem daran montierten Applikationselement, abzufahren ist.

Vorzugsweise ist der Roboter, der erste Roboter und/oder der zweite Roboter ein Lackierroboter zum Lackieren eines Werkstücks oder mehrerer Werkstücke (z.B. Kraftfahrzeugkarosserien, Anbauteile für Kraftfahrzeugkarosserien, etc.) oder allgemein ein Applikationsroboter, der zweckmäßig zum Applizieren eines Fluids ausgebildet ist.

Insbesondere kann das Dynamikverhalten und/oder der erste Belastungskennwert des ersten Stellungsbereichs an das Dynamikverhalten und/oder den Belastungskennwert des zweiten Stellungsbereichs angepasst werden, um im Wesentlichen korrespondierende (gleiche bzw. symmetrische) Lackierqualitäten bzw. Lackierergebnisse zumindest im ersten Stellungsbereich und im zweiten Stellungsbereich zu erzielen.

Die Lackierqualität bzw. das Lackierergebnis umfasst z.B. eine im Wesentlichen gleiche Schichtdickenverteilung und/oder einen im Wesentlichen gleichen Farbton und/oder ein im Wesentlichen gleiches Verlaufsverhalten und/oder eine im Wesentlichen gleiche Struktur und/oder einen im Wesentlichen gleichen Glanz usw. des applizierten Lacks bzw. allgemein ein im Wesentlichen korrespondierendes (gleiches oder symmetrisches) Lackerscheinungsbild.

Der Roboter, der erste Roboter und/oder der zweite Roboter ist vorzugsweise programmierbar und/oder mehrachsig.

Das Dynamikverhalten umfasst insbesondere ein Geschwindigkeitsverhalten und/oder ein positives und/oder negatives Beschleunigungsverhalten.

Das Dynamikverhalten kann ferner ein Bewegungsverhalten basierend auf bzw. entlang einer Roboterbahn oder mehreren Roboterbahnen oder zumindest Abschnitten davon umfassen, die vorzugsweise zumindest einen gekrümmten Abschnitt und/oder einen mäanderförmigen Abschnitt aufweisen können.

Insbesondere kann ein Roboter in unterschiedlichen ersten und zweiten Stellungsbereichen (z.B. Nahbereich und Fernbereich) eine im Wesentlichen gleiche Roboterbahn einhalten. Ebenso kann vorzugsweise der erste Roboter und der zweite Roboter im ersten Stellungsbereich und im zweiten Stellungsbereich im Wesentlichen korrespondierende (gleiche oder symmetrische) Roboterbahnen einhalten.

Es ist möglich, dass der oder die Roboter das vorzugsweise exakt gleiche oder "symmetrische" Roboterprogramm abfahren. Ebenso ist es möglich, dass der oder die Roboter vorzugsweise exakt gleiche oder "symmetrische" Roboterbahnen oder zumindest Abschnitte davon abfahren.

Die von dem Roboter, dem ersten Roboter und/oder dem zweiten Roboter abzufahrenden Roboterbahnen, zumindest die dem ersten Stellungsbereich und dem zweiten Stellungsbereich zugeordneten Roboterbahnabschnitte, korrespondieren vorzugsweise zueinander. Dies ist insbesondere dann der Fall, wenn die Roboterbahnen, oder zumindest die dem ersten Stellungsbereich und dem zweiten Stellungsbereich zugeordneten Roboterbahnabschnitte, im Wesentlichen gleich sind und/oder kopierbar bzw. reproduzierbar sind. Dies ist ferner z.B. der Fall, wenn die Roboterbahnen, oder zumindest die dem ersten Stellungsbereich und dem zweiten Stellungsbereich zugeordneten Roboterbahnabschnitte im Wesentlichen symmetrisch, insbesondere spiegelsymmetrisch sind, und/oder im Wesentlichen gleich aber versetzt abzufahren sind (z.B. zeitlich und/oder räumlich versetzt abzufahren sind (z.B. nacheinander)).

Vorzugsweise korrespondieren der erste Stellungsbereich des ersten Roboters und der zweite Stellungsbereich des zweiten Roboters zueinander. Dies ist insbesondere dann der Fall, wenn der erste Stellungsbereich des ersten Roboters und der zweite Stellungsbereich des zweiten Roboters zumindest ungefähr und/oder im Wesentlichen gleich sind (aber z.B. räumlich und/oder zeitlich versetzt) bzw. gleich sein sollten, aber z.B. aufgrund Toleranzen voneinander abweichen, oder im Wesentlichen symmetrisch sind, insbesondere spiegelsymmetrisch sind.

Beispielsweise korrespondieren der erste Stellungsbereich des ersten Roboters und der zweite Stellungsbereich des zweiten Roboters zueinander, wenn die Roboterbahnen des ersten Roboters und des zweiten Roboters, oder zumindest die dem ersten Stellungsbereich des ersten Roboters und dem zweiten Stellungsbereich des zweiten Roboters zugeordneten Roboterbahnabschnitte, im Wesentlichen gleich sind (z.B. zeitlich und/oder räumlich versetzt abgefahren werden) und/oder kopierbar bzw. reproduzierbar sind, aber auch, wenn die Roboterbahnen des ersten Roboters und des zweiten Roboters, oder zumindest die dem ersten Stellungsbereich des ersten Roboters und dem zweiten Stellungsbereich des zweiten Roboters zugeordneten Roboterbahnabschnitte, im Wesentlichen symmetrisch, insbesondere spiegelsymmetrisch sind.

Zu berücksichtigen ist, dass absolut exakt korrespondierende bzw. absolut exakt gleiche oder absolut exakt symmetrische Stellungsbereiche praktisch nicht realisierbar sind. Es ist jedoch im Rahmen der Erfindung ausreichend, wenn die Stellungsbereiche innerhalb eines Toleranzbereichs von beispielsweise ±10%, ±5%, ±2%, ±1% liegen.

Vorzugsweise sind der erste Stellungsbereich und der zweite Stellungsbereich des einen Roboters unterschiedliche Stellungsbereiche (z.B. Nahbereich/Fernbereich, stark ausgestreckt/wenig ausgestreckt, etc.).

Es ist möglich, dass insbesondere bei einer mäanderförmigen Roboterbahn oder einer mäanderförmigen Lackierweise die Wende- bzw. Kurvenpunkte der Roboterbahnen im Wesentlichen gleich sind, egal, wo sich die Wende- bzw. Kurvenpunkte relativ zu dem oder den Werkstücken befinden. Vorteilhaft ist so eine sichere Bahnplanung möglich bzw. lässt sich ein Lackierergebnis an einer Stelle des oder der Werkstücke auf eine Andere übertragen.

Der Belastungskennwert repräsentiert vorzugsweise eine maximal zulässige Belastung. Die maximal zulässige Belastung kann sich z.B. auf den Roboter, den ersten Roboter und/oder den zweiten Roboter insgesamt beziehen, aber auch insbesondere auf zumindest eine Roboterachse, Baugruppe, Einzelteile, Getriebe, Antriebstechnik, Führungen, Lagerstellen, etc. des Roboters, des ersten Roboters und/oder des zweiten Roboters.

Es ist möglich, dass der Belastungskennwert ein mechanischer und/oder dynamischer Belastungskennwert ist. Vorzugsweise ist der Belastungskennwert ein Drehmomenten- und/oder Spannungskennwert, ein Beschleunigungskennwert, der sich auf eine positive und/oder negative Beschleunigung beziehen kann, ein Geschwindigkeitskennwert, ein Strom- und/oder Spannungskennwert eines Antriebsmotors für den Roboter, den ersten Roboter und/oder den zweiten Roboter, oder zumindest ein Regelungs- oder Steuerparameter der Antriebstechnik für den Roboter, den ersten Roboter und/oder den zweiten Roboter.

Vorzugsweise lässt das Dynamikverhalten und/oder der Belastungskennwert des ersten Stellungsbereichs eine größere Belastung zu als das Dynamikverhalten und/oder der Belastungskennwert des zweiten Stellungsbereichs. Insbesondere wird der erste Belastungskennwert auf den zweiten Belastungskennwert reduziert. Selbiges kann entsprechend für das Dynamikverhalten gelten.

Es ist möglich, dass ein bestimmter Belastungskennwert und/oder ein bestimmtes Dynamikverhalten (z.B. eine bestimmte maximal zulässige Geschwindigkeit und/oder Beschleunigung) bei einem bestimmten Roboterbahnabschnitt und/oder einem bestimmten Stellungsbereich eines Roboters übertragen wird auf die gesamte Roboterbahn des Roboters oder zumindest einen Teil davon oder auf eine Roboterbahn eines oder mehrerer anderer Roboter oder zumindest einen Teil davon und/oder auf das Roboterprogramm.

Vorzugsweise wird dadurch ermöglicht, dass eine gesamte Roboterbahn eines Roboters oder mehrere Roboterbahnen verschiedener Roboter oder zumindest wesentliche Teile davon an ein bestimmtes Dynamikverhalten und/oder einen bestimmten Belastungskennwert angepasst werden.

Vorteilhaft können unterschiedliche Belastungskennwerte bzw. Belastungen abgeglichen werden und somit zumindest abschnittsweise korrespondierende (gleiche oder symmetrische) Roboterbahnen, Geschwindigkeiten und/oder Beschleunigungen auf dem zu bearbeitenden (lackierenden) Werkstück oder den mehreren z.B. auf einem Werkstückträger angeordneten Werkstücken gefahren werden.

Es ist möglich, eine Anpassung einzelner Roboterbahnen oder Roboterbahnabschnitte, einzelner Roboter oder eine Anpassung von Lackierbereichen unterschiedlicher Roboter oder eine Anpassung einer Lackierzone oder Lackierlinie, mehrerer Lackierzonen oder Lackierlinien oder gar einer ganzen Lackiererei durchzuführen. Dies könnte z.B. durch Mitschreiben der Momente, der Stromwerte am Antriebsmotor, der Regelparameter der Antriebe usw. erfolgen, wobei auch andere Messmethoden vorstellbar sind, wie z.B. eine 3D-Vermessung vorzugsweise in der Lackierkabine.

Vorzugsweise wird das Dynamikverhalten und/oder der Belastungskennwert des ersten Stellungsbereichs an das Dynamikverhalten und/oder den Belastungskennwert des zweiten Stellungsbereichs angepasst, um ein im Wesentlichen korrespondierendes (gleiches oder symmetrisches) Dynamikverhalten, im Wesentlichen korrespondierende (gleiche oder symmetrische) Roboterbahnen (oder zumindest Abschnitte davon) oder Roboterbahnabweichungen, im Wesentlichen gleiche Geschwindigkeiten und/oder im Wesentlichen gleiche (positive und/oder negative) Beschleunigungen zumindest im ersten Stellungsbereich und im zweiten Stellungsbereich zu erzielen bzw. abzufahren.

Es ist möglich, dass ein Werkstück (z.B. eine Kraftfahrzeugkarosserie oder ein Anbauteil für eine Kraftfahrzeugkarosserie) insgesamt oder zumindest wesentliche Teile davon korrespondierend, insbesondere mit der gleichen oder symmetrischen Roboterdynamik und/oder dem gleichen oder symmetrischen Lackierergebnis bzw. Lackerscheinungsbild lackiert wird. Ferner ist es möglich, dass mehrere Werkstücke (z.B. Kraftfahrzeugkarosserien oder Anbauteile für Kraftfahrzeugkarosserien) insgesamt oder zumindest wesentliche Teile davon korrespondierend, insbesondere mit der gleichen oder symmetrischen Roboterdynamik und/oder einem korrespondierenden (gleichen oder symmetrischen) Lackierergebnis bzw. Lackerscheinungsbild lackiert werden.

Weiterhin möglich ist ein Übertrag von Zone zu Zone, Linie zu Linie und/oder Lackschicht zu Lackschicht, sofern es sich um gleiche oder symmetrische Roboterbahnen handelt. Das kann in Lackierereien so sein. Eine optimale Roboterbahn kann für Primer, BC (BC1, BC2) ("Base Coat") und CC ("Clear Coat") theoretisch gleich sein.

Ziel ist es, dass der Abgleich bzw. die Anpassung über mehrere, vorzugsweise alle Roboter, die das oder die Werkstücke lackieren, passiert und dadurch mehrere, vorzugsweise alle Roboter die zumindest im Wesentlichen gleichen oder symmetrischen, vorzugsweise exakt gleichen oder symmetrischen Roboterbahnen (insbesondere ebenso Verlauf, Geschwindigkeit und/oder Beschleunigung) einhalten. Insbesondere hat dies automatisch in jeder Robotersteuerung zu erfolgen. In der maximalen Ausbaustufe gleichen sich die Roboter direkt ab. Der Abgleich und/oder das dynamische Verhalten sind auswertbar bzw. anzeigbar.

Mittels der Erfindung ist es möglich, festzustellen, welcher Stellungsbereich bzw. welcher Roboter ein "Nadelöhr" darstellt, auf den sich der Roboter oder die anderen Roboter einstellen müssen.

Der "schwächste" Roboter bzw. der "schwächste" Stellungsbereich macht die Vorgabe für die Anderen.

Vorzugsweise kann eine Reserve in der Dynamik des "Schwächsten" vorgesehen werden, andernfalls würden sich nachteilig die Parameter des oder der Roboter ständig ändern. Nach einem vorzugsweise einmaligen Abgleich bzw. Anpassung des oder der Roboter sollten sich der oder die Roboter gar nicht mehr oder nur in Ausnahmefällen abstimmen müssen. Sonst läuft man Gefahr, die Lackierergebnisse nachteilig zu beeinflussen. Nach der ersten Abstimmung des oder der Roboter mit Reserve in der Dynamik des "Schwächsten", sollte die Überwachung des oder der Roboter eher eine Abweichung als Aufgabe für die Instandhaltung für Wartung oder Reparatur interpretieren.

Ferner umfasst die Erfindung eine Statistik zur Auswertung, welches zu lackierende Werkstück, welche Lackschicht, welche Lackierzone, welcher Roboter welche Einschränkung(en) in der Dynamik bzw. dem Belastungskennwert und/oder dem Roboter- bzw. Lackierbahnverlauf hat.

Weiterhin umfasst die Erfindung eine Grenzwertauswertung, wann die Veränderungen auf Störungen, Alterung, Schwergängigkeit oder Defekt oder sich ankündigenden Defekt hinweisen und eingeschritten werden sollte, z.B. durch Schmierung, Wartung, Reparatur, etc..

Beispielsweise kann der Roboter, der erste Roboter und/oder der zweite Roboter eine gesamte Roboterbahn oder mehrere gesamte (z.B. zeitlich und/oder räumlich versetzt abzufahrende) Roboterbahnen oder zumindest wesentliche Teile davon mit im Wesentlichen korrespondierender (gleicher bzw. symmetrischer) Roboterdynamik abfahren.

Der Roboter, der erste Roboter und/oder der zweite Roboter kann ein vorprogrammiertes Roboterprogramm abfahren, um das Dynamikverhalten und/oder den Belastungskennwert zu ermitteln, was online oder offline z.B. mittels eines Simulationstools erfolgen kann.

Ferner ist es möglich, dass der Roboter, der erste Roboter und/oder der zweite Roboter vermessen wird oder sich selbst vermisst, um den Belastungskennwert bzw. das Dynamikverhalten zu ermitteln, und/oder, um Unterschiede im Dynamikverhalten im ersten Stellungsbereich und im zweiten Stellungsbereich zu ermitteln.

Die Vermessung erfolgt vorzugsweise nach der Montage des Roboters, des ersten Roboters und/oder des zweiten Roboters und der Installation der Applikationstechnik. Großteils lässt sich die Auswirkung der Gewichte über CAD (Computer Aided Design) und über Bewegungssimulation im Vorhinein simulieren und ermitteln. Die Toleranzen der Mechanik und der Antriebe z.B. nicht. Diese können aber mittels der Vermessung ermittelt werden.

Vorzugsweise werden das Dynamikverhalten bzw. die Belastungskennwerte ständig während des Betriebs des Roboters, des ersten Roboters und/oder des zweiten Roboters ermittelt, wodurch vorteilhaft Änderungen während des Betriebs erfasst werden können und darauf vorzugsweise unmittelbar reagiert werden kann.

Es ist möglich, dass die Dynamikverhalten bzw. die Belastungskennwerte zyklisch oder im Wesentlichen ständig während des Betriebs des Roboters, des ersten Roboters und/oder des zweiten Roboters aneinander angepasst werden.

Eine Anpassung des Dynamikverhaltens bzw. des Belastungskennwerts des ersten Stellungsbereichs an das Dynamikverhalten bzw. den Belastungskennwert des zweiten Stellungsbereichs führt zu einer Veränderung der Standzeit und/oder Lebensdauer des Roboters, des ersten Roboters und/oder des zweiten Roboters oder zumindest einzelner Teile davon.

Es ist möglich, dass die zumindest ungefähre Standzeit und/ oder Lebensdauer des Roboters, des ersten Roboters und/oder des zweiten Roboters oder zumindest einzelner Teile davon ermittelt wird, die sich ergibt, wenn das Dynamikverhalten und/oder der Belastungskennwert des ersten Stellungsbereichs an das Dynamikverhalten und/oder den Belastungskennwert des zweiten Stellungsbereichs angepasst wird, und z.B. einer Überwachungsperson oder einem Programmierer bei der Programmierung des Roboters, des ersten Roboters und/oder des zweiten Roboters angezeigt wird, z.B. mittels eines Displays.

Es ist möglich, dass wenn z.B. ein Programmierer bei der Programmierung des Roboters, des ersten Roboters und/oder des zweiten Roboters den Belastungskennwert bzw. das Dynamikverhalten des ersten Stellungsbereichs an den Belastungskennwert bzw. das Dynamikverhalten des zweiten Stellungsbereichs anpasst, die sich ändernde zumindest ungefähre Standzeit und/ oder Lebensdauer des Roboters, des ersten Roboters und/oder des zweiten Roboters oder zumindest einzelner Teile davon ermittelt wird und dem Programmierer zugänglich gemacht wird, z.B. mittels eines Displays. Dies könnte auch einer übergeordneten Steuerung (z.B. Zonensteuerung) und/oder einer zentralen Leittechnik übermittelt werden.

Vorzugsweise wird dem Programmierer z.B. über ein Display oder in der Simulationssoftware über die "Dynamikeinstellungen" des Roboters, des ersten Roboters und/oder des zweiten Roboters die Lebensdauer-/Standzeitverkürzung- oder Verlängerung prozentual angezeigt.

Es ist möglich, dass das Dynamikverhalten und/oder der Belastungskennwert des ersten Stellungsbereichs an das Dynamikverhalten und/oder den Belastungskennwert des zweiten Stellungsbereichs anpasst wird, um die zumindest ungefähre Standzeit und/oder Lebensdauer des Roboters, des ersten Roboters und/ oder des zweiten Roboters oder zumindest einzelner Teile davon gezielt zu beeinflussen, insbesondere um ein definiertes Maß bzw. ein vom Betreiber (z.B. Programmierer) gewünschtes Maß zu verlängern und/oder zu verkürzen.

Im Rahmen der Erfindung ist es möglich, dass trotz unterschiedlicher dynamischer oder leistungsspezifischer Möglichkeiten des Roboters, des ersten Roboters und/oder des zweiten Roboters, insbesondere gleiche oder gleiche, aber räumlich und/oder zeitlich versetzt abzufahrende oder symmetrische, vorzugsweise spiegelbildliche Roboterbahnen oder zumindest Abschnitte davon abgefahren werden können und/oder im Wesentlichen korrespondierende (gleiche oder symmetrische) Lackierergebnisse erzielt werden.

Ferner ist zu erwähnen, dass bei der Fertigung bzw. Einrichtung des oder der Roboter ein Kennwert an einer Masterkurve, insbesondere Testprogramm mit größerer Belastung für mehrere Achsen vorgesehen sein kann oder es können die Achsen eine vorgegebene Kurve mit höchster zulässiger Belastung durchlaufen und daraus die positive oder negative Abweichung der Achsleistungen bzw. der im Raum verlaufenden möglichen Bewegungsbahnen berechnet werden und als Kennwert dem oder den Robotern mitgegeben werden. Mit diesem Kennwert kann ein erster Abgleich des oder der Roboter einer Lackierzone, Lackierlinie und/oder Lackiererei gemacht werden.

Außerdem ist zu erwähnen, dass der Roboter, der erste Roboter und/oder der zumindest eine zweite Roboter insbesondere als Applikationsroboter zum Applizieren von Fluid z.B. auf ein oder mehrere Werkstücke ausgeführt sein kann (beispielsweise als Applikationsroboter zum Applizieren von Dicht- oder Sealingmaterial (z.B. zur Nahtabdichtung oder zur Herstellung eines Unterbodensealings), zum Applizieren von Bördelfalzen, zum Applizieren von Klebematerial oder anderer gewünschter Materialien). Die hierin unter besonderer Bezugnahme auf Lackierroboter oder das Lackieren beschriebenen Merkmale gelten somit insbesondere auch allgemein für andere Applikationsroboter oder andere Applikationsarten. Im Rahmen der Erfindung können der oder die Roboter auch als sogenannte Handling- oder Handhabungsroboter ausgeführt sein.

Die Erfindung umfasst ferner Hardware und Software, die geeignet und eingerichtet sind, das hierin beschriebene Betriebsverfahren ausführen zu lassen.

Insbesondere umfasst die Erfindung ein Steuersystem, umfassend ein Anpassungs-, Programmier- und/oder Beschichtungssystem, für einen Roboter oder einen ersten Roboter und zumindest einen weiteren zweiten Roboter. Das Steuersystem ist vorzugsweise eingerichtet und geeignet, um das hierin beschriebene Betriebsverfahren auszuführen.

Beispielsweise kann das Steuersystem einen Prozessor, Funktionseinheiten, die eingerichtet und geeignet sind, um die hierin beschriebenen Schritte des Betriebsverfahrens auszuführen, einen Speicher, Eingangs- und Ausgangsschnittstellen und/oder Datenleitungen zur Kommunikation von Daten umfassen. Vorzugsweise können die Funktionseinheiten hardwaremäßig als separate Bauteile bzw. Baugruppen realisiert werden. Alternativ besteht jedoch die Möglichkeit, dass die jeweilige(n) Funktionseinheit(en) als Softwaremodul z.B. in einem Computerprogramm realisiert wird/werden.

Die Erfindung umfasst auch ein Computerprogramm und/oder ein computerlesbares Medium, das Befehle enthält, die, wenn ausgeführt durch einen Prozessor bzw. Computer, ein Betriebsverfahren wie hierin beschrieben ausführen lassen. Ferner umfasst die Erfindung einen Computer oder eine Datenverarbeitungseinheit mit einem solchen Computerprogramm.

Weitere Merkmale des Steuersystems, des Computerprogramms, der Datenverarbeitungseinheit und/oder des computerlesbaren Mediums ergeben sich unmittelbar aus dem hierin beschriebenen Betriebsverfahren.

Darüber hinaus umfasst die Erfindung auch einen Roboter, insbesondere einen Applikations- oder Lackierroboter, der eingerichtet und konfiguriert ist, ein Betriebsverfahren wie hierin beschrieben auszuführen, und/ oder der ein Steuersystem wie hierin beschrieben umfasst.

Ferner umfasst die Erfindung eine Anordnung mit zumindest zwei Robotern, insbesondere zumindest zwei Applikations- oder Lackierrobotern, wobei die Roboter ausgebildet und konfiguriert sind, um ein Betriebsverfahren wie hierin beschrieben auszuführen, und/oder einem Steuersystem wie hierin beschrieben.

Obige Merkmale sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele in Verbindung mit den beigefügten Figuren. Es zeigen:
- Fig. 1: einen beispielhaften Lackierroboter, der erfindungsgemäß betrieben werden kann,
- Fig.2a bis 2c: schematische Darstellungen eines Lackierroboters gemäß Fig. 1 in einem ersten Stellungsbereich gemäß einem ersten Ausführungsbeispiel der Erfindung,
- Fig.3a bis 3c: schematische Darstellungen des Lackierroboters gemäß Fig. 2a bis 2c in einem zweiten Stellungsbereich gemäß dem ersten Ausführungsbeispiel der Erfindung,
- Fig. 4: ein Flussdiagramm eines Verfahrens gemäß einem Ausführungsbeispiel der Erfindung,
- Fig. 5a, 5b: schematische Darstellungen eines ersten Lackierroboters gemäß Fig. 1 in einem ersten Stellungsbereich und eines zweiten Lackierroboters gemäß Fig. 1 in einem zweiten Stellungsbereich gemäß einem zweiten Ausführungsbeispiel der Erfindung,
- Fig. 6: ein Flussdiagramm eines Verfahrens gemäß einem Ausführungsbeispiel der Erfindung, und
- Fig. 7: eine schematische Darstellung eines ersten Lackierroboters in einem ersten Stellungsbereich und eines zweiten Lackierroboters in einem zweiten Stellungsbereich gemäß einem weiteren Ausführungsbeispiel der Erfindung.

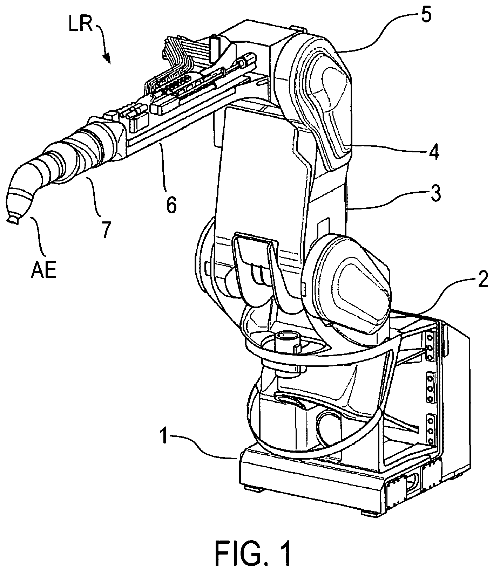

Figur 1 zeigt eine perspektivische Ansicht eines herkömmlichen beispielhaften mehrachsigen Lackierroboters LR, der erfindungsgemäß betreibbar ist. Der Lackierroboter LR umfasst einen Grundkörper 1, ein Antriebsgehäuse 2, umfassend eine erste Achse und eine zweite Achse, einen ersten Arm 3, eine Getriebeeinheit 4, umfassend eine dritte Achse, ein Antriebsgehäuse 5, umfassend eine vierte Achse, eine fünfte Achse und eine sechste Achse, einen zweiten Arm 6 und eine Handachse 7. Der Lackierroboter LR kann ortsfest oder längsverschieblich gelagert sein. An dem zweiten Arm 6 kann ferner ein Andockschlitten und Farbleitungen gesehen werden. An die Handachse 7 ist ein Applikationselement AE (z.B. ein Rotationszerstäuber) zum Applizieren von Lack montiert.

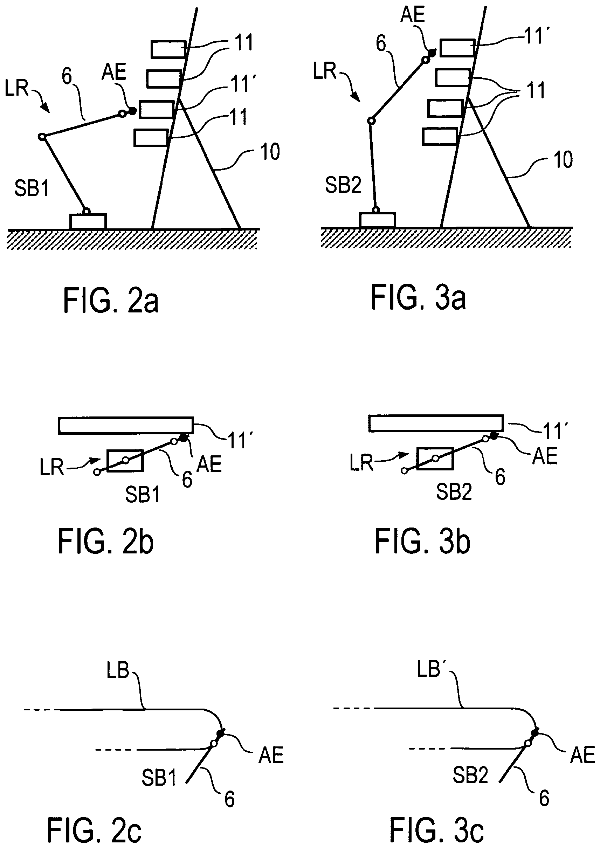

Figuren 2a und 3a sind schematische Seitenansichten des in Figur 1 gezeigten Lackierroboters LR und zu lackierender Werkstücke 11 (z.B. Stoßstangen), die an einem Werkstückträger 10 positioniert sind. Das Werkstück 11, das in den Figuren 2a bis 2c und 3a bis 3c einem Lackiervorgang unterworfen wird, ist mit einem Apostroph versehen.

Figur 2a zeigt eine Seitenansicht des Lackierroboters LR im Betrieb in einem ersten Stellungsbereich SB1, um ein im Nahbereich des Lackierroboters LR positioniertes Werkstück 11' zu lackieren. Figur 2b zeigt eine Draufsicht auf den Lackierroboter LR gemäß Figur 2a. Figur 2c zeigt einen Lackierbahnabschnitt einer schematischen beispielhaften Lackierbahn LB, die von dem in den Figuren 2a und 2b gezeigten Lackierroboter LR bzw. dem daran montierten Applikationselement AE abgefahren wird.

Beim Abfahren der Lackierbahn LB zum Lackieren des Werkstücks 11' im Nahbereich des Lackierroboters LR (Figuren 2a, 2b, 2c) durchläuft der Lackierroboter LR eine Vielzahl von Stellungen bzw. Stellungsbereichen, z.B. indem er um eine oder mehrere Achsen verschwenkt oder verschoben wird. Einer dieser Stellungsbereiche ist in den Figuren 2a bis 2c schematisch zu sehen und mit dem Bezugszeichen SB1 gekennzeichnet.

Einem bestimmten Lackierbahnpunkt kann vorzugsweise eine bestimmte Stellung des Lackierroboters LR zugeordnet werden, während einem bestimmten Lackierbahnabschnitt insbesondere ein bestimmter Stellungsbereich des Lackierroboters LR zugeordnet werden kann.

Figur 3a zeigt eine Seitenansicht des Lackierroboters LR im Betrieb in einem zweiten Stellungsbereich SB2, um ein im Fernbereich des Lackierroboters LR positioniertes Werkstück 11' zu lackieren. Figur 3b zeigt eine Draufsicht auf den Lackierroboter LR gemäß Figur 3a. Figur 3c zeigt einen Lackierbahnabschnitt einer schematischen beispielhaften Lackierbahn LB', die von dem in den Figuren 3a und 3b gezeigten Lackierroboter LR bzw. dem daran montierten Applikationselement AE abgefahren wird.

Die in Figur 3c gezeigte Lackierbahn LB' korrespondiert zu der in Figur 2c gezeigten Lackierbahn LB. Die in Figur 3c gezeigte Lackierbahn LB' gleicht der in Figur 2c gezeigten Lackierbahn LB, wird jedoch nach oben versetzt abgefahren.

Beim Abfahren der Lackierbahn LB' zum Lackieren des Werkstücks 11' im Fernbereich des Lackierroboters LR (Figuren 3a, 3b, 3c) durchläuft der Lackierroboter LR eine Vielzahl von Stellungsbereichen, z.B. indem er um eine oder mehrere Achsen verschwenkt oder verschoben wird. Einer dieser Stellungsbereiche ist in den Figuren 3a bis 3c schematisch zu sehen und mit dem Bezugszeichen SB2 gekennzeichnet.

Der Lackierroboter LR umfasst z.B. im ersten Stellungsbereich SB1 ein bestimmtes erstes Dynamikverhalten und zumindest einen bestimmten ersten Belastungskennwert, der eine maximal zulässige Belastung des Lackierroboters LR in dem ersten Stellungsbereich SB1 repräsentiert.

Der Lackierroboter LR umfasst z.B. im zweiten Stellungsbereich SB2 ein bestimmtes zweites Dynamikverhalten und zumindest einen bestimmten zweiten Belastungskennwert, der eine maximal zulässige Belastung des Lackierroboters LR im zweiten Stellungsbereich SB2 repräsentiert.

Üblicherweise sind im Nahbereich des Lackierroboters LR aufgrund niedrigerer Belastungen (z.B. Drehmomente, Spannungen, etc.) höhere Geschwindigkeiten und Beschleunigungen möglich als im Fernbereich. Werden diese tatsächlich ausgenutzt, kommt es zu differierenden Lackierergebnissen.

Um diesen Nachteil zu beseitigen, werden die Belastungskennwerte, Belastungen und/oder das Dynamikverhalten des Lackierroboters LR ermittelt, die bei der Lackierung der Werkstücke 11 auftreten. Zu diesem Zweck kann der Lackierroboter LR das Lackierprogramm oder einzelne Lackierbahnabschnitte durchlaufen und dabei z.B. den ersten und zweiten Belastungskennwert messen bzw. berechnen. Dies kann online oder offline z.B. mittels eines Simulationstools erfolgen. Ferner ist es möglich, dass der Lackierroboter LR vermessen wird oder sich selbst vermisst, um die Belastungskennwerte zu ermitteln. Mittels einer Vermessung des Lackierroboters LR können insbesondere Unterschiede im Dynamikverhalten des Lackierroboters LR ermittelt werden.

Im Rahmen der Erfindung wird das erste Dynamikverhalten und/oder der erste Belastungskennwert des Lackierroboters LR, die dem ersten Stellungsbereich SB1 zugeordnet sind, an das zweite Dynamikverhalten und/oder den zweiten Belastungskennwert, die dem zweiten Stellungsbereich SB2 zugeordnet sind, angepasst. Auf diese Art und Weise ist es möglich, dass die Werkstücke 11 mit der gleichen Dynamik, insbesondere korrespondierenden, d.h. gleichen jedoch versetzt abzufahrenden Lackierbahnen LB, LB', gleichen Geschwindigkeiten und gleichen Beschleunigungen abgefahren und lackiert werden können.

Das oben beschriebene Ausführungsbeispiel beschreibt einen Fall, in dem sich ein Roboter insbesondere in Höhenrichtung ("nach oben bzw. unten") ausstreckt.

Es sind jedoch auch Ausführungsbeispiele möglich, in denen sich ein Roboter insbesondere in Tiefenrichtung, also z.B. quer über ein quer zur Förderrichtung liegendes Werkstück (insbesondere Anbauteile wie etwa Bumper, Stoßstangen, etc. oder eine Motorhaube einer Fahrzeugkarosse) auszustrecken hat. In diesem Fall ist die dynamische Belastung meist sogar größer als im Fall, in dem sich ein Roboter in Höhenrichtung ("nach oben bzw. unten") auszustrecken hat.

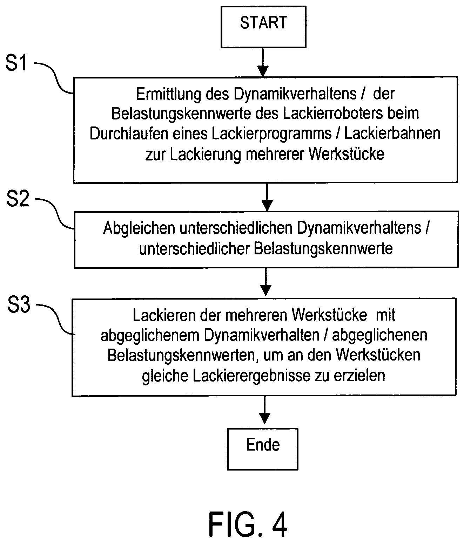

Figur 4 zeigt ein Flussdiagramm eines Betriebsverfahrens eines Lackierroboters gemäß einem Ausführungsbeispiel der Erfindung, beispielsweise des Lackierroboters LR aus den Figuren 2a bis 2c und 3a bis 3c.

In einem Schritt S1 wird das Dynamikverhalten bzw. Belastungskennwerte des Lackierroboters LR beim Durchlaufen eines Lackierprogramms bzw. einer oder mehrerer Lackierbahnen zum Lackieren der Werkstücke 11 ermittelt.

In einem Schritt S2 werden unterschiedliche Dynamikverhalten bzw. Belastungskennwerte des Lackierroboters LR abgeglichen (zumindest wird das Dynamikverhalten bzw. Belastungskennwerte des ersten Stellungsbereichs SB1 an das Dynamikverhalten bzw. Belastungskennwerte des zweiten Stellungsbereich SB2 angepasst).

In einem Schritt S3 werden die Werkstücke 11 mit abgeglichenem Dynamikverhalten bzw. abgeglichenen Belastungskennwerten, insbesondere korrespondierenden Lackierbahnen, gleichen Geschwindigkeiten und gleichen Beschleunigungen abgefahren und lackiert, wodurch gleiche Lackierergebnisse an den Werkstücken 11 erzielt werden.

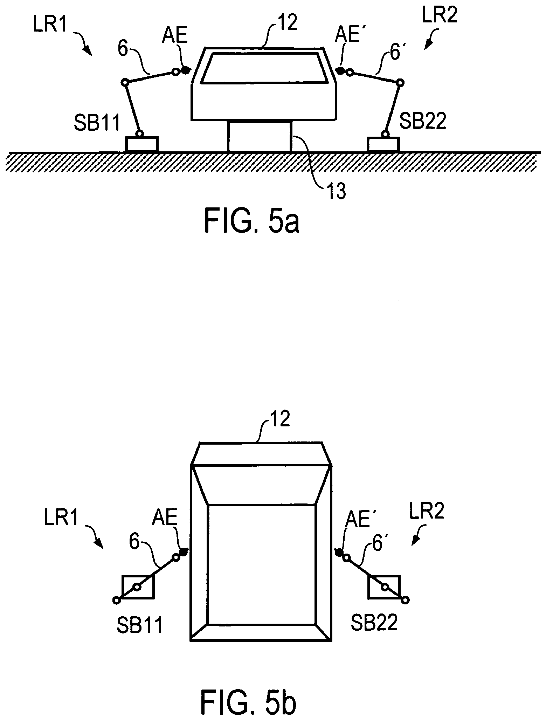

Das Ausführungsbeispiel gemäß den Figuren 5a und 5b stimmt teilweise mit dem vorstehend beschriebenen Ausführungsbeispiel überein, wobei ähnliche oder identische Teile mit dem gleichen Bezugszeichen versehen sind, und zu deren Erläuterung auch auf die Beschreibung des vorstehend beschriebenen Ausführungsbeispiels verwiesen wird, um Wiederholungen zu vermeiden.

Figur 5a zeigt eine schematische Seitenansicht eines ersten Lackierroboters LR1 und eines zweiten Lackierroboters LR2 und ein zu lackierendes Werkstück 12 (z.B. eine Kraftfahrzeugkarosserie), das an einem Förderband 13 angeordnet ist. Die Lackierroboter LR1 und LR2 können baugleiche Lackierroboter wie in Figur 1 gezeigt sein. Es ist aber auch möglich, dass die Lackierroboter LR1 und LR2 von unterschiedlichen Herstellern kommen. Bezugszeichen 6 kennzeichnet den zweiten Arm und Bezugszeichen AE das Applikationselement des ersten Lackierroboters LR1, während Bezugszeichen 6' den zweiten Arm und Bezugszeichen AE' das Applikationselement des zweiten Lackierroboters LR2 kennzeichnet.

In Figur 5a ist der erste Lackierroboter LR1 im Betrieb in einem ersten Stellungsbereich SB11 zu sehen, um die eine Seite des Werkstücks 12 zu lackieren. In Figur 5b ist eine Draufsicht auf den ersten Lackierroboter LR1 gemäß Figur 5a zu sehen.

In Figur 5a ist der zweite Lackierroboter LR2 im Betrieb in einem zweiten Stellungsbereich SB22 zu sehen, um die andere Seite des Werkstücks 12 zu lackieren. In Figur 5b ist eine Draufsicht auf den zweiten Lackierroboter LR2 gemäß Figur 5a zu sehen.

Der erste Lackierroboter LR1 und der zweite Lackierroboter LR2 sind gegenüberliegend positioniert, insbesondere achsensymmetrisch bzw. spiegelbildlich, um die beiden Seiten des Werkstücks 12 zu lackieren.

Beim Abfahren einer Lackierbahn zum Lackieren des Werkstücks 12 auf der einen Seite durchläuft der erste Lackierroboter LR1 eine Vielzahl von Stellungsbereichen, z.B. indem er um eine oder mehrere Achsen verschwenkt oder verschoben wird. Einer dieser Stellungsbereiche ist in den Figuren 5a und 5b schematisch zu sehen und mit dem Bezugszeichen SB11 gekennzeichnet.

Einem bestimmten Lackierbahnpunkt kann vorzugsweise eine bestimmte Stellung des ersten Lackierroboters LR1 zugeordnet werden, während einem bestimmten Lackierbahnabschnitt insbesondere ein bestimmter Stellungsbereich des ersten Lackierroboters LR1 zugeordnet werden kann.

Beim Abfahren einer Lackierbahn zum Lackieren des Werkstücks 12 auf der anderen Seite durchläuft der zweite Lackierroboter LR2 eine Vielzahl von Stellungsbereichen, z.B. indem er um eine oder mehrere Achsen verschwenkt oder verschoben wird. Einer dieser Stellungsbereiche ist in den Figuren 5a und 5b schematisch zu sehen und mit dem Bezugszeichen SB22 gekennzeichnet.

Einem bestimmten Lackierbahnpunkt kann vorzugsweise eine bestimmte Stellung des zweiten Lackierroboters LR2 zugeordnet werden, während einem bestimmten Lackierbahnabschnitt insbesondere ein bestimmter Stellungsbereich des zweiten Lackierroboters LR2 zugeordnet werden kann.

Die Lackierbahn des ersten Lackierroboters LR1 korrespondiert zu der Lackierbahn des zweiten Lackierroboters LR2. Die Lackierbahn des ersten Lackierroboters LR1 und die Lackierbahn des zweiten Lackierroboters LR2 sind achsensymmetrisch bzw. spiegelbildlich zueinander ausgebildet.

Ebenso korrespondieren, wie aus den Figuren 5a und 5b ersichtlich wird, der erste Stellungsbereich SB11 des ersten Lackierroboters LR1 und der zweite Stellungsbereich SB22 des zweiten Lackierroboters LR2. Der erste Stellungsbereich SB11 des ersten Lackierroboters LR1 und der zweite Stellungsbereich SB22 des zweiten Lackierroboters LR2 sind achsensymmetrisch bzw. spiegelsymmetrisch zueinander.

Der erste Lackierroboter LR1 umfasst im ersten Stellungsbereich SB11 ein bestimmtes erstes Dynamikverhalten und zumindest einen bestimmten ersten Belastungskennwert, der eine maximal zulässige Belastung des ersten Lackierroboters LR1 im ersten Stellungsbereich SB11 repräsentiert.

Der zweite Lackierroboter LR2 umfasst im zweiten Stellungsbereich SB22 ein bestimmtes zweites Dynamikverhalten und zumindest einen bestimmten zweiten Belastungskennwert, der eine maximal zulässige Belastung des zweiten Lackierroboters LR2 im zweiten Stellungsbereich SB22 repräsentiert.

Aufgrund z.B. ungleichmäßigem Verschleiß, insbesondere aber aufgrund Toleranzen der Mechanik (z.B. Achsen, Getriebe, Führungen, Lagerstellen, etc.) weicht das erste Dynamikverhalten und/oder der erste Belastungskennwert von dem zweiten Dynamikverhalten und/oder dem zweiten Belastungskennwert zumindest geringfügig ab.

Um diesen Nachteil zu beseitigen, werden die Belastungskennwerte, Belastungen und/oder das Dynamikverhalten des ersten Lackierroboters LR1 und des zweiten Lackierroboters LR2 ermittelt. Dies kann wie beim ersten Ausführungsbeispiel erfolgen, auf dessen Beschreibung verwiesen wird, um Wiederholungen zu vermeiden.

Im Rahmen der Erfindung ist es möglich, das Dynamikverhalten und/oder den Belastungskennwert des ersten Lackierroboters LR1 im ersten Stellungsbereich SB11 an das Dynamikverhalten und/oder den Belastungskennwert des zweiten Lackierroboters LR2 im zweiten Stellungsbereich SB22 anzupassen. Auf diese Art und Weise ist es möglich, dass die beiden Seiten des Werkstücks 12 mit gleicher bzw. korrespondierender Dynamik, insbesondere spiegelbildlichen Lackierbahnen, gleichen Geschwindigkeiten und gleichen Beschleunigungen abgefahren und lackiert werden können.

Ergänzend ist es möglich, dass die Belastungskennwerte, Belastungen und/oder das Dynamikverhalten des ersten Lackierroboters LR1 und des zweiten Lackierroboters LR2 im Wesentlichen ständig oder zyklisch während des Betriebs des ersten Lackierroboters LR1 und des zweiten Lackierroboters LR2 ermittelt werden. Dann ist es möglich, dass der erste Belastungskennwert bzw. das erste Dynamikverhalten des ersten Lackierroboters LR1 zyklisch oder im Wesentlichen ständig während des Betriebs an den zweiten Belastungskennwert bzw. das zweite Dynamikverhalten des zweiten Lackierroboters LR2 angepasst wird.

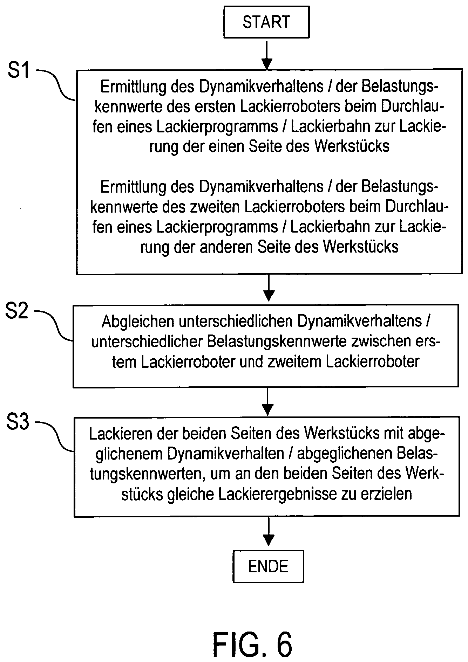

Figur 6 zeigt ein Flussdiagramm eines Betriebsverfahrens für Lackierroboter gemäß einem Ausführungsbeispiel der Erfindung, beispielsweise des ersten und zweiten Lackierroboters LR1 und LR2 aus den Figuren 5a und 5b.

In einem Schritt S1 wird das Dynamikverhalten bzw. Belastungskennwerte des ersten Lackierroboters LR1 beim Durchlaufen eines Lackierprogramms bzw. einer oder mehrerer Lackierbahnen oder zumindest Abschnitten davon zum Lackieren einer Seite des Werkstücks 12 ermittelt. Ferner wird das Dynamikverhalten bzw. Belastungskennwerte des zweiten Lackierroboters LR2 beim Durchlaufen eines Lackierprogramms bzw. einer oder mehrerer Lackierbahnen oder zumindest Abschnitten davon zum Lackieren der anderen Seite des Werkstücks 12 ermittelt.

In einem Schritt S2 werden abweichende Dynamikverhalten bzw. Belastungskennwerte zwischen erstem Lackierroboter LR1 und zweitem Lackierroboter LR2 aneinander angeglichen (zumindest wird das Dynamikverhalten bzw. die Belastungskennwerte im ersten Stellungsbereich SB11 des ersten Lackierroboters LR1 an das Dynamikverhalten bzw. die Belastungskennwerte im zweiten Stellungsbereich SB22 des zweiten Lackierroboters LR2 angepasst).

In einem Schritt S3 werden die beiden Seiten des Werkstücks 12 mit angeglichenem Dynamikverhalten bzw. angeglichenen Belastungskennwerten, insbesondere korrespondierenden (spiegelbildlichen) Lackierbahnen, gleichen Geschwindigkeiten und gleichen Beschleunigungen von dem ersten Lackierroboter LR1 und dem zweiten Lackierroboter LR2 abgefahren und lackiert, wodurch korrespondierende (gleiche bzw. symmetrische) Lackierergebnisse an den beiden Seiten des Werkstücks 12 erzielt werden.

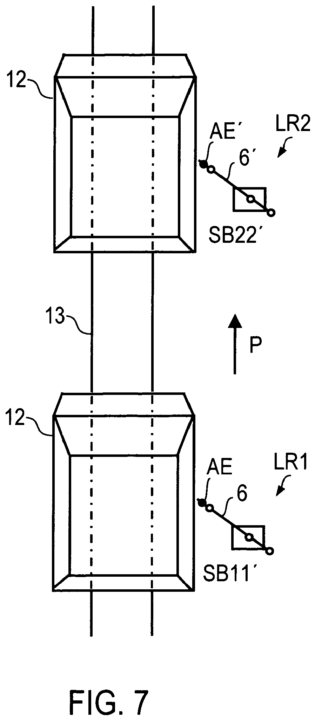

Das Ausführungsbeispiel gemäß Figur 7 stimmt teilweise mit den vorstehend beschriebenen Ausführungsbeispielen, insbesondere dem Ausführungsbeispiel gemäß den Figuren 5a, 5b und 6 überein, wobei ähnliche oder identische Teile mit dem gleichen Bezugszeichen versehen sind, und zu deren Erläuterung auch auf die Beschreibung der vorstehend beschriebenen Ausführungsbeispiele verwiesen wird, um Wiederholungen zu vermeiden.

Das in den Figuren 5a und 5b gezeigte Ausführungsbeispiel beschreibt einen Fall, bei dem gespiegelte Lackierprogramme bzw. Roboterbahnen abgefahren werden, insbesondere ein Lackierroboter die linke Seite des Werkstücks 12 lackiert und ein weiterer gegenüberliegender Lackierroboter die rechte Seite des Werkstücks 12 lackiert. Dabei sind der erste Stellungsbereich und der zweite Stellungsbereich achsensymmetrische zueinander.

Das in Figur 7 gezeigte Ausführungsbeispiel hingegen beschreibt einen Fall, bei dem die gleichen Lackierprogramme bzw. Roboterbahnen abgefahren werden, insbesondere ein Lackierroboter LR1 zunächst z.B. 50% der Endlackschichtdicke auf die rechte Seite des Werkstücks 12 appliziert und daraufhin (zeitlich und räumlich nacheinander) der zweite- Lackierroboter LR2 die verbleibenden 50% der Endlackschichtdicke auf die rechte Seite des Werkstücks 12 appliziert. Die in Figur 7 gezeigten Lackierroboter LR1 und LR2 führen also nacheinander die im Wesentlichen gleiche Lackieraufgabe aus.

Die Lackierbahn des ersten Lackierroboters LR1 korrespondiert zu bzw. gleicht der Lackierbahn des zweiten Lackierroboters LR2. Ebenso korrespondieren, wie aus Figur 7 ersichtlich wird, der erste Stellungsbereich SB11' des ersten Lackierroboters LR1 und der zweite Stellungsbereich SB22' des zweiten Lackierroboters LR2. Der erste Stellungsbereich SB11' des ersten Lackierroboters LR1 ist gleich dem zweiten Stellungsbereich SB22' des zweiten Lackierroboters LR2.

Pfeil P kennzeichnet die Förderrichtung des Förderbands 13. Es ist auch möglich, dass in einer weiteren Lackierkabine erneut lackiert werden muss (z.B. Basecoat 1, Basecoat 2 oder naß-in-naß Primer, Basecoat, Clearcoat). Dann führen mindestens drei Lackierroboter, bei Bedarf sogar mehr als drei Lackierroboter, z.B. auch bei Bumpern und Lackierereien mit hoher Lackierkapazität oder mehreren Linien mit gleicher Lackieraufgabe, das exakt das gleiche Bahnprogramm aus.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den durch die Ansprüche definierten Schutzbereich fallen.

## Patentansprüche

1. Betriebsverfahren für einen Applikationsroboter (LR) oder für einen ersten Applikationsroboter (LR1) und zumindest einen weiteren zweiten Applikationsroboter (LR2) zum Applizieren eines Fluids auf ein oder mehrere Werkstücke,
wobei der Applikationsroboter (LR) im Betrieb einen ersten Stellungsbereich (SB1), der ein Nahbereich ist, und einen zweiten Stellungsbereich (SB2), der ein Fernbereich ist, durchläuft,
oder wobei der erste Applikationsroboter (LR1) und der zumindest eine weitere zweite Applikationsroboter (LR2) im Betrieb mehrere Stellungsbereiche (SB11, SB22) durchlaufen,
**dadurch gekennzeichnet, dass**
S1) für die Stellungsbereiche (SB1, SB2) des Roboters (LR) dessen Dynamikverhalten, das eine maximal zulässige positive oder negative Beschleunigung umfasst, und/oder ein Belastungskennwert, der eine maximal zulässige Belastung des Roboters (LR) repräsentiert, bei Abfahren eines Roboterprogramms ermittelt wird,
oder für die Stellungsbereiche (SB 11, SB 22) des ersten Roboters (LR1) und des weiteren zweiten Roboters (LR2) deren Dynamikverhalten, das eine maximal zulässige positive oder negative Beschleunigung umfasst, und/oder ein Belastungskennwert, der eine maximal zulässige Belastung des betreffenden Roboters (LR1, LR2) repräsentiert, bei Abfahren eines Roboterprogramms ermittelt werden,
S2) das Dynamikverhalten und/oder der Belastungskennwert des Roboters (LR) in dem ersten Stellungsbereich (SB1) an das Dynamikverhalten und/oder den Belastungskennwert in dem zweiten Stellungsbereich (SB2) des Roboters (LR) angepasst wird
oder das Dynamikverhalten und/oder der Belastungskennwert des ersten Roboters (LR1) in zumindest einem ersten Stellungsbereich (SB11) an das Dynamikverhalten und/oder den Belastungskennwert des zweiten Roboters (LR2) in zumindest einem zweiten Stellungsbereich (SB22) angepasst wird, und
S3) das Fluid mit dem angepassten Dynamikverhalten und/oder Belastungskennwert appliziert wird.

2. Betriebsverfahren nach Anspruch 1, **dadurch gekennzeichnet,**
**dass** das Dynamikverhalten und/oder der Belastungskennwert des ersten Stellungsbereichs (SB1; SB11) an das Dynamikverhalten und/oder den Belastungskennwert des zweiten Stellungsbereichs (SB2; SB22) angepasst wird, um Applizierergebnisse zumindest im ersten Stellungsbereich (SB1; SB11) und im zweiten Stellungsbereich (SB2; SB22) im Wesentlichen aneinander anzupassen, und
**dass** das Werkstück oder die mehreren Werkstücke eine oder mehrere Kraftfahrzeugkarosserien oder ein oder mehrere Anbauteile für Kraftfahrzeugkarosserien sind.

3. Betriebsverfahren nach Anspruch 2, **dadurch gekennzeichnet, dass** die Applizierergebnisse ein im Wesentlichen korrespondierendes Lackerscheinungsbild umfassen.

4. Betriebsverfahren nach einem der vorhergehenden Ansprüche, **dadurch gekennzeichnet, dass** das Dynamikverhalten des ersten Stellungsbereichs (SB1; SB11) und das Dynamikverhalten des zweiten Stellungsbereichs (SB2; SB22) ein Bewegen basierend auf einer zumindest abschnittsweise gekrümmten Roboterbahn oder zumindest Abschnitten davon umfasst.

5. Betriebsverfahren nach einem der vorhergehenden Ansprüche, **dadurch gekennzeichnet, dass** der Belastungskennwert des ersten Stellungsbereichs (SB1; SB11) und der Belastungskennwert des zweiten Stellungsbereichs (SB2; SB22)
a) ein maximal zulässiger Belastungsgrenzwert ist, und/oder
b) ein elektrischer und/oder mechanischer und/oder dynamischer Belastungskennwert ist, und/oder
c) ein Momenten- und/oder Spannungskennwert ist, und/oder
d) ein positiver und/oder negativer Beschleunigungskennwert ist, und/oder
e) ein Geschwindigkeitskennwert ist, und/oder
f) ein Strom- und/oder Spannungskennwert eines Antriebsmotors für den Roboter (LR), den ersten Roboter (LR1) und/oder den zweiten Roboter (LR2) ist, und/oder
g) zumindest ein Regelungs- oder Steuerparameter der Antriebstechnik für den Roboter (LR), den ersten Roboter (LR1) und/oder den zweiten Roboter (LR2) ist, und/oder
h) sich auf zumindest eine Achse des Roboters (LR), des ersten Roboters (LR1) und/oder des zweiten Roboters (LR2) bezieht.

6. Betriebsverfahren nach einem der vorhergehenden Ansprüche, **dadurch gekennzeichnet**
a) **dass** das Dynamikverhalten und/oder der Belastungskennwert des ersten Stellungsbereichs (SB1; SB11) eine größere Belastung zulässt als das Dynamikverhalten und/oder der Belastungskennwert des zweiten Stellungsbereichs (SB2; SB22), und/oder
b) **dass** das Dynamikverhalten und/oder der Belastungskennwert des ersten Stellungsbereichs (SB1; SB11) eine größere positive und/oder negative Beschleunigung zulässt als das Dynamikverhalten und/oder der Belastungskennwert des zweiten Stellungsbereichs (SB2; SB22).

7. Betriebsverfahren nach einem der vorhergehenden Ansprüche, **dadurch gekennzeichnet, dass** das Dynamikverhalten und/oder der Belastungskennwert des ersten Stellungsbereichs (SB1; SB11) an das Dynamikverhalten und/oder den Belastungskennwert des zweiten Stellungsbereichs (SB2; SB22) angepasst wird,
a) um ein im Wesentlichen korrespondierendes Dynamikverhalten zumindest im ersten Stellungsbereich (SB1; SB11) und im zweiten Stellungsbereich (SB2; SB22) zu erzielen, und/oder
b) um im Wesentlichen korrespondierende Roboterbahnen oder Roboterbahnabweichungen oder zumindest Abschnitte davon zumindest im ersten Stellungsbereich (SB1; SB11) und im zweiten Stellungsbereich (SB2; SB22) zu erzielen, und/oder
c) um im Wesentlichen gleiche Geschwindigkeiten zumindest im ersten Stellungsbereich (SB1; SB11) und im zweiten Stellungsbereich (SB2; SB22) zu erzielen, und/oder
d) um im Wesentlichen gleiche positive und/oder negative Beschleunigungen zumindest im ersten Stellungsbereich (SB1; SB11) und im zweiten Stellungsbereich (SB2; SB22) zu erzielen.

8. Betriebsverfahren nach einem der vorhergehenden Ansprüche, **dadurch gekennzeichnet, dass** das Dynamikverhalten und/oder der Belastungskennwert des ersten Stellungsbereichs (SB1; SB11) und das Dynamikverhalten und/oder der Belastungskennwert des zweiten Stellungsbereichs (SB2; SB22) online oder offline ermittelt wird.

9. Betriebsverfahren nach einem der vorhergehenden Ansprüche, **dadurch gekennzeichnet, dass** der Roboter (LR), der erste Roboter (LR1) und/oder der zweite Roboter (LR2) vermessen wird oder sich selbst vermisst,
a) um das Dynamikverhalten und/oder den Belastungskennwert des ersten Stellungsbereichs (SB1; SB11) und des zweiten Stellungsbereichs (SB2; SB22) zu ermitteln, und/oder
b) um Unterschiede zwischen dem Dynamikverhalten im erstem Stellungsbereich (SB1; SB11) und dem Dynamikverhalten im zweitem Stellungsbereich (SB2; SB22) zu ermitteln.

10. Betriebsverfahren nach einem der vorhergehenden Ansprüche, **dadurch gekennzeichnet, dass** das Dynamikverhalten und/oder der Belastungskennwert des ersten Stellungsbereichs (SB1; SB11) und des zweiten Stellungsbereichs (SB2; SB22) zyklisch oder im Wesentlichen ständig während des Betriebs des Roboters (LR), des ersten Roboters (LR1) und/oder des zweiten Roboters (LR2) ermittelt wird.

11. Betriebsverfahren nach einem der vorhergehenden Ansprüche, **dadurch gekennzeichnet, dass** das Dynamikverhalten und/oder der Belastungskennwert des ersten Stellungsbereichs (SB1; SB11) zyklisch oder im Wesentlichen ständig während des Betriebs des Roboters (LR), des ersten Roboters (LR1) und/oder des zweiten Roboters (LR2) an das Dynamikverhalten und/oder den Belastungskennwert des zweiten Stellungsbereichs (SB2; SB22) angepasst wird.

12. Betriebsverfahren nach einem der vorhergehenden Ansprüche, **dadurch gekennzeichnet, dass** die zumindest ungefähre Standzeit und/oder Lebensdauer des Roboters (LR), des ersten Roboters (LR1) und/oder des zweiten Roboters (LR2) oder zumindest einzelner Teile davon ermittelt wird, die sich ergibt, wenn das Dynamikverhalten und/oder der Belastungskennwert des ersten Stellungsbereichs an das Dynamikverhalten und/oder den Belastungskennwert des zweiten Stellungsbereichs angepasst wird.

13. Betriebsverfahren nach einem der vorhergehenden Ansprüche, **dadurch gekennzeichnet, dass** das Dynamikverhalten und/oder der Belastungskennwert des ersten Stellungsbereichs (SB1, SB11) an das Dynamikverhalten und/oder den Belastungskennwert des zweiten Stellungsbereichs (SB2, SB22) anpasst wird, um die zumindest ungefähre Standzeit und/oder Lebensdauer des Roboters (LR), des ersten Roboters (LR1) und/oder des zweiten Roboters (LR2) oder zumindest einzelner Teile davon gezielt zu beeinflussen.

14. Betriebsverfahren nach einem der vorhergehenden Ansprüche, **dadurch gekennzeichnet, dass** der erste Stellungsbereich und der zweite Stellungsbereich unterschiedlich oder im Wesentlichen korrespondierend sind.

15. Steuersystem für einen Roboter (LR) oder einen ersten Roboter (LR1) und zumindest einen weiteren zweiten Roboter (LR2),
wobei der Roboter (LR) oder der erste Roboter (LR1) und der zumindest eine weitere zweite Roboter (LR2) ausgebildet ist, um im Betrieb mehrere Stellungsbereiche zu durchlaufen, **dadurch gekennzeichnet, dass** das Steuersystem eingerichtet ist, um das Betriebsverfahren nach einem der vorhergehenden Ansprüche auszuführen.

16. Applikationsroboter (LR), der ausgebildet und konfiguriert ist, um ein Betriebsverfahren nach einem der Ansprüche 1 bis 14 auszuführen, und der ein Steuersystem gemäß Anspruch 15 umfasst.

17. Anordnung, aufweisend zumindest zwei Applikationsroboter (LR1, LR2), die ausgebildet und konfiguriert sind, um ein Betriebsverfahren nach einem der Ansprüche 1 bis 14 auszuführen, und die ein Steuersystem gemäß Anspruch 15 aufweisen.

18. Computerprogramm, wobei das Computerprogramm, wenn es von einem Prozessor oder einer Datenverarbeitungseinheit ausgeführt wird, veranlasst, ein Betriebsverfahren nach einem der Ansprüche 1 bis 14 auszuführen.

19. Computerprogramm nach Anspruch 18, das Anweisungen enthält, um das Betriebsverfahren auszuführen.

## Claims

1. Operating method for an application robot (LR) or for a first application robot (LR1) and at least one further second application robot (LR2) for applying a fluid on one or more workpieces, wherein the application robot (LR) runs during operation through a first positioning range (SB1), which is a near range, and a second positioning range (SB2), which is a remote range,
or wherein the first application robot (LR1) and the at least one further second application robot (LR2) run during operation through a plurality of positioning ranges (SB11, SB22), **characterized in that**
S1) for the positioning ranges (SB1, SB2) of the robot (LR) its dynamic behaviour, comprising a maximum permissible positive or negative acceleration, and/or a load characteristic value, representing a maximum permissible loading of the robot, are determined during traversing of a robot program,
or for the positioning ranges (SB11, SB22) of the first robot (LR1) and of the further second robot (LR2) their dynamic behaviour, comprising a maximum permissible positive or negative acceleration, and/or a load characteristic value, representing a maximum permissible loading of the respective robot (LR1, LR2), are determined during traversing of a robot program,
S2) the dynamic behaviour and/or the load characteristic value of the robot (LR) in the first positioning range (SB1) are adapted to the dynamic behaviour and/or to the load characteristic value in the second positioning range (SB2) of the robot (LR)
or the dynamic behaviour and/or the load characteristic value of the first robot (LR1) in at least a first positioning range (SB11) are adapted to the dynamic behaviour and/or to the load characteristic value of the second robot (LR2) in at least one second positioning range (SB22), and
S3) the fluid is applied with the adapted dynamic behaviour and/or load characteristic value.

2. Operating method according to claim 1, **characterized in that** the dynamic behaviour and/or the load characteristic value of the first positioning range (SB1; SB11) are adapted to the dynamic behaviour and/or to the load characteristic value of the second positioning range (SB2; SB22) in order to essentially adapt application results to each other at least in the first positioning range (SB1; SB11) and in the second positioning range (SB2; SB22), and
that the workpiece or the plurality of workpieces are one or more motor vehicle bodies or one or more attachment parts for motor vehicle bodies.

3. Operating method according to claim 2, **characterized in that** the application results comprise an essentially corresponding paint appearance.

4. Operating method according to any one of the preceding claims, **characterized in that** the dynamic behaviour of the first positioning range (SB1; SB11) and the dynamic behaviour of the second positioning range (SB2; SB22) comprise a movement based on a robot path which is curved at least in sections, or at least sections thereof.

5. Operating method according to any one of the preceding claims, **characterized in that** the load characteristic value of the first positioning range (SB1; SB11) and the load characteristic value of the second positioning range (SB2; SB22)
a) is a maximum permissible load limit value, and/or
b) is an electrical and/or mechanical and/or dynamic load characteristic value, and/or
c) is a moment and/or voltage characteristic value, and/or
d) is a positive and/or negative acceleration characteristic value, and/or
e) is a speed characteristic value, and/or
f) is a current and/or voltage characteristic value of a drive motor for the robot (LR), the first robot (LR1) and/or the second robot (LR2), and/or
g) is at least one regulation or control parameter of the drive system for the robot (LR), the first robot (LR1) and/or the second robot (LR2), and/or
h) refers to at least one axis of the robot (LR), of the first robot (LR1) and/or of the second robot (LR2).

6. Operating method according to any one of the preceding claims, **characterized in that**
a) the dynamic behaviour and/or the load characteristic value of the first positioning range (SB1; SB11) allows a greater loading than the dynamic behaviour and/or the load characteristic value of the second positioning range (SB2; SB22), and/or
b) the dynamic behaviour and/or the load characteristic value of the first positioning range (SB1; SB11) allows a greater positive and/or negative acceleration than the dynamic behaviour and/or the load characteristic value of the second positioning range (SB2; SB22).

7. Operating method according to any one of the preceding claims, **characterized in that** the dynamic behaviour and/or the load characteristic value of the first positioning range (SB1; SB11) is adapted to the dynamic behaviour and/or the load characteristic value of the second positioning range (SB2; SB22)
a) in order to achieve an essentially corresponding dynamic behaviour at least in the first positioning range (SB1; SB11) and in the second positioning range (SB2; SB22), and/or
b) in order to achieve essentially corresponding robot paths or robot path deviations or at least sections thereof at least in the first positioning range (SB1; SB11) and in the second positioning range (SB2; SB22), and/or
c) in order to achieve essentially equal speeds at least in the first positioning range (SB1; SB11) and in the second positioning range (SB2; SB22), and/or
d) in order to achieve essentially equal positive and/or negative accelerations at least in the first positioning range (SB1; SB11) and in the second positioning range (SB2; SB22).

8. Operating method according to any one of the preceding claims, **characterized in that** the dynamic behaviour and/or the load characteristic value of the first positioning range (SB1; SB11) and the dynamic behaviour and/or the load characteristic value of the second positioning range (SB2; SB22) is determined online or off-line.

9. Operating method according to any one of the preceding claims, **characterized in that** the robot (LR), the first robot (LR1) and/or the second robot (LR2) is measured or measures itself
a) in order to determine the dynamic behaviour and/or the load characteristic value of the first positioning range (SB1; SB11) and of the second positioning range (SB2; SB22), and/or
b) in order to determine differences between the dynamic behaviour in the first positioning range (SB1; SB11) and the dynamic behaviour in the second positioning range (SB2; SB22).

10. Operating method according to any one of the preceding claims, **characterized in that** the dynamic behaviour and/or the load characteristic value of the first positioning range (SB1; SB11) and of the second positioning range (SB2; SB22) is determined cyclically or essentially continuously during operation of the robot (LR), of the first robot (LR1) and/or of the second robot (LR2).

11. Operating method according to any one of the preceding claims, **characterized in that** the dynamic behaviour and/or the load characteristic value of the first positioning range (SB1; SB11) is cyclically or essentially continuously adapted during operation of the robot (LR), of the first robot (LR1) and/or of the second robot (LR2) to the dynamic behaviour and/or the load characteristic value of the second positioning range (SB2; SB22).

12. Operating method according to any one of the preceding claims, **characterized in that** the at least approximate service life and/or lifetime of the robot (LR), of the first robot (LR1) and/or of the second robot (LR2) or at least individual parts thereof are determined, which results if the dynamic behaviour and/or the load characteristic value of the first positioning range is adapted to the dynamic behaviour and/or the load characteristic value of the second positioning range.

13. Operating method according to any one of the preceding claims, **characterized in that** the dynamic behaviour and/or the load characteristic value of the first positioning range (SB1, SB11) is adapted to the dynamic behaviour and/or the load characteristic value of the second positioning range (SB2, SB22) in order to influence the at least approximate service life and/or lifetime of the robot (LR), of the first robot (LR1) and/or of the second robot (LR2), or at least individual parts thereof, in a targeted manner.

14. Operating method according to any one of the preceding claims, **characterized in that** the first positioning range and the second positioning range are different or essentially corresponding with each other.

15. A control system for a robot (LR) or a first robot (LR1) and at least one further second robot (LR2),
wherein the robot (LR) or the first robot (LR1) and the at least one further second robot (LR2) are designed to run through a plurality of positioning ranges during operation, **characterized in that** the control system is set up in order to carry out the operating method according to any one of the preceding claims.

16. Application robot (LR), which is designed and configured in order to execute an operating method according to any one of the claims 1 to 14, and which comprises a control system according to claim 15.

17. An arrangement having at least two application robots (LR1, LR2), which are designed and configured in order to execute an operating method according to any one of the claims 1 to 14, and which comprise a control system according to claim 15.

18. A computer program, wherein the computer program, when executed by a processor or a data processing unit, initiates execution of an operating method according to any one of claims 1 to 14.

19. The computer program according to claim 18, which receives commands to carry out the operating method.

## Revendications

1. Procédé de fonctionnement pour un robot d'application (LR) ou pour un premier robot d'application (LR1) et au moins un autre deuxième robot d'application (LR2) pour l'application d'un fluide sur une ou plusieurs pièces,
dans lequel le robot d'application (LR) traverse, pendant le fonctionnement, une première plage de positionnement (SB1), qui est une plage proche, et une deuxième plage de positionnement (SB2), qui est une plage lointaine,
ou dans lequel le premier robot d'application (LR1) et au moins un autre deuxième robot d'application (LR2) traversent, pendant le fonctionnement, plusieurs plages de positionnement (SB11, SB22),
**caractérisé en ce que**
S1)pour les plages de positionnement (SB1, SB2) du robot (LR), son comportement dynamique, qui comprend une accélération positive ou négative maximale admissible et/ou une valeur caractéristique de charge qui représente une charge maximale admissible du robot (LR), est déterminé lors du démarrage d'un programme du robot, ou pour les plages de positionnement (SB11, SB22) du premier robot d'application (LR1) et de l'au moins un autre deuxième robot d'application (LR2), leur comportement dynamique, qui comprend une accélération positive ou négative maximale admissible et/ou une valeur caractéristique de charge qui représente une charge maximale admissible du robot (LR1, LR2) concerné, sont déterminés lors du démarrage d'un programme de robot,
S2) le comportement dynamique et/ou la valeur caractéristique de charge du robot (LR) dans la première plage de positionnement (SB1) est adapté au comportement dynamique et/ou à la valeur caractéristique de charge dans la deuxième plage de positionnement (SB2) du robot (LR),
ou le comportement dynamique et/ou la valeur caractéristique de charge du premier robot (LR1) dans au moins une première plage de positionnement (SB11) est adapté au comportement dynamique et/ou à la valeur caractéristique de charge du deuxième robot (LR2) dans au moins une deuxième plage de positionnement (SB22) et
S3) le fluide est appliqué avec le comportement dynamique et/ou la valeur caractéristique de charge.

2. Procédé de fonctionnement selon la revendication 1, **caractérisé en ce que**
le comportement dynamique et/ou la valeur caractéristique de charge de la première plage de positionnement (SB1 ; SB11) est adapté au comportement dynamique et/ou à la valeur caractéristique de charge de la deuxième plage de positionnement (SB2 ; SB22), afin d'adapter globalement entre eux les résultats d'application au moins dans la première plage de positionnement (SB1 ; SB11) et dans la deuxième plage de positionnement (SB2 ; SB22) et
la pièce ou les plusieurs pièces sont une ou plusieurs carrosseries de véhicules automobiles ou une ou plusieurs pièces rapportées pour des carrosseries de véhicules automobiles.

3. Procédé de fonctionnement selon la revendication 2, **caractérisé en ce que** les résultats d'application comprennent un aspect de la peinture globalement correspondant.

4. Procédé de fonctionnement selon l'une des revendications précédentes, **caractérisé en ce que** le comportement dynamique de la première plage de positionnement (SB1 ; SB11) et le comportement dynamique de la deuxième plage de positionnement (SB2 ; SB22) comprend un déplacement basé sur une trajectoire du robot incurvée au moins à certains endroits ou au moins des portions de celle-ci.

5. Procédé de fonctionnement selon l'une des revendications précédentes, **caractérisé en ce que** la valeur caractéristique de la charge de la première plage de positionnement (SB1 ; SB11) et la valeur caractéristique de la charge de la deuxième plage de positionnement (SB2 ; SB22)
a) est une valeur caractéristique de charge maximale admissible et/ou
b) est une valeur caractéristique de charge électrique et/ou mécanique et/ou dynamique et/ou
c) est une valeur caractéristique de charge de couple et/ou de tension et/ou
d) est une valeur caractéristique d'accélération positive et/ou négative et/ou
e) est une valeur caractéristique de vitesse et/ou
f) est une valeur caractéristique de courant et/ou de tension d'un moteur d'entraînement pour le robot (LR), le premier robot (LR1) et/ou le deuxième robot (LR2) et/ou
g) est au moins un paramètre de régulation ou de contrôle du système d'entraînement pour le robot (LR), le premier robot (LR1) et/ou le deuxième robot (LR2) et/ou
h) concerne au moins un axe du robot (LR), du premier robot (LR1) et/ou du deuxième robot (LR2).

6. Procédé de fonctionnement selon l'une des revendications précédentes, **caractérisé en ce que**
a) le comportement dynamique et/ou la valeur caractéristique de charge de la première plage de positionnement (SB1 ; SB11) permet une charge plus importante que le comportement dynamique et/ou la valeur caractéristique de la charge de la deuxième plage de positionnement (SB2 ; SB22) et/ou
b) le comportement dynamique et/ou la valeur caractéristique de charge de la première plage de positionnement (SB1 ; SB11) permet une accélération positive et/ou négative plus importante que le comportement dynamique et/ou la valeur caractéristique de la charge de la deuxième plage de positionnement (SB2 ; SB22).

7. Procédé de fonctionnement selon l'une des revendications précédentes, **caractérisé en ce que** comportement dynamique et/ou la valeur caractéristique de charge de la première plage de positionnement (SB1 ; SB11) est adapté au comportement dynamique et/ou à la valeur caractéristique de la charge de la deuxième plage de positionnement (SB2 ; SB22),
a) afin d'obtenir un comportement dynamique globalement correspondant au moins dans la première plage de positionnement (SB1 ; SB11) et dans la deuxième plage de positionnement (SB2 ; SB22), et/ou
b) afin d'obtenir des trajectoires ou des déviations du robot globalement correspondantes ou au moins des portions de celles-ci au moins dans la première plage de positionnement (SB1 ; SB11) et dans la deuxième plage de positionnement (SB2 ; SB22), et/ou
c) afin d'obtenir des vitesses globalement égales au moins dans la première plage de positionnement (SB1 ; SB11) et dans la deuxième plage de positionnement (SB2 ; SB22), et/ou
d) afin d'obtenir des accélérations positives et/ou négatives globalement égales au moins dans la première plage de positionnement (SB1 ; SB11) et dans la deuxième plage de positionnement (SB2 ; SB22).

8. Procédé de fonctionnement selon l'une des revendications précédentes, **caractérisé en ce que** le comportement dynamique et/ou la valeur caractéristique de charge de la première plage de positionnement (SB1 ; SB11) et le comportement dynamique et/ou à la valeur caractéristique de la charge de la deuxième plage de positionnement (SB2 ; SB22) sont déterminés online ou offline.

9. Procédé de fonctionnement selon l'une des revendications précédentes, **caractérisé en ce que** le robot (LR), le premier robot (LR1) et/ou le deuxième robot (LR) sont mesurés ou se mesurent eux-mêmes
a) afin de déterminer le comportement dynamique et/ou la valeur caractéristique de charge de la première plage de positionnement (SB1 ; SB11) et de la deuxième plage de positionnement (SB2 ; SB22) et/ou
b) afin de déterminer des différences entre le comportement dynamique dans la première plage de positionnement (SB1 ; SB11) et le comportement dynamique dans la deuxième plage de positionnement (SB2 ; SB22).

10. Procédé de fonctionnement selon l'une des revendications précédentes, **caractérisé en ce que** le comportement dynamique et/ou la valeur caractéristique de charge de la première plage de positionnement (SB1 ; SB11) et de la deuxième plage de positionnement (SB2 ; SB22) est déterminé de manière cyclique ou globalement en continu pendant le fonctionnement du robot (LR), du premier robot (LR1) et/ou du deuxième robot (LR2).

11. Procédé de fonctionnement selon l'une des revendications précédentes, **caractérisé en ce que** le comportement dynamique et/ou la valeur caractéristique de charge de la première plage de positionnement (SB1 ; SB11) est adapté, de manière cyclique ou globalement en continu pendant le fonctionnement du robot (LR), du premier robot (LR1) et/ou du deuxième robot (LR2), au comportement dynamique et/ou à la valeur caractéristique de charge de la deuxième plage de positionnement (SB2 ; SB22).

12. Procédé de fonctionnement selon l'une des revendications précédentes, **caractérisé en ce que** la longévité et/ou la durée de vie approximative du robot (LR), du premier robot (LR1) et/ou du deuxième robot (LR2) ou d'au moins certaines parties de ceux-ci, qui résulte de l'adaptation du comportement dynamique et/ou de la valeur caractéristique de charge de la première plage de positionnement au comportement dynamique et/ou à la valeur caractéristique de charge de la deuxième plage de positionnement, est déterminée.

13. Procédé de fonctionnement selon l'une des revendications précédentes, **caractérisé en ce que** le comportement dynamique et/ou la valeur caractéristique de charge de la première plage de positionnement (SB1 ; SB11) est adapté au comportement dynamique et/ou à la valeur caractéristique de charge de la deuxième plage de positionnement (SB2 ; SB22) afin d'influencer de manière ciblée l'au moins une longévité et/ou durée de vie approximative du robot (LR), du premier robot (LR1) et/ou du deuxième robot (LR2) ou d'au moins certaines parties de ceux-ci.

14. Procédé de fonctionnement selon l'une des revendications précédentes, **caractérisé en ce que** la première plage de positionnement et la deuxième plage de positionnement sont différentes sont globalement correspondantes.

15. Système de commande pour un robot (LR) et un premier robot (LR1) et au moins un autre deuxième robot (LR2),
dans lequel le robot (LR) ou le premier robot (LR1) et l'au moins un autre deuxième robot (LR2) est conçu pour traverser plusieurs plages de fonctionnement pendant le fonctionnement,
**caractérisé en ce que** le système de commande est conçu pour exécuter le procédé de fonctionnement selon l'une des revendications précédentes.

16. Robot d'application (LR), qui est conçu et configuré pour exécuter un procédé de fonctionnement selon l'une des revendications 1 à 14, et qui comprend un système de commande selon la revendication 15.

17. Dispositif, comprenant au moins deux robots d'application (LR1, LR2), qui sont conçus et configurés pour exécuter un procédé de fonctionnement selon l'une des revendications 1 à 14 et qui comprennent un système de commande selon la revendication 15.

18. Programme informatique, dans lequel le programme informatique, lorsqu'il est exécuté sur un processeur ou sur une unité de traitement de données, fait en sorte qu'un procédé de fonctionnement selon l'une des revendications 1 à 14 soit exécuté.

19. Programme informatique selon la revendication 18, qui contient des instructions pour exécuter le procédé de fonctionnement.
